(19) **Europäisches Patentamt / European Patent Office / Office européen des brevets**

(11) **EP 1 828 941 B1**

(12) **FASCICULE DE BREVET EUROPEEN**

(45) Date de publication et mention
de la délivrance du brevet:
**06.06.2012 Bulletin 2012/23**

(51) Int Cl.:
*G06F 17/30* (2006.01)   *G06F 17/24* (2006.01)
*G06F 17/10* (2006.01)

(21) Numéro de dépôt: **05809470.7**

(22) Date de dépôt: **11.10.2005**

(86) Numéro de dépôt international:
**PCT/FR2005/002515**

(87) Numéro de publication internationale:
**WO 2006/040473 (20.04.2006 Gazette 2006/16)**

(54) **DISPOSITIF DE TRAITEMENT DE DONNÉES À DÉFINITION FORMELLE**

EINRICHTUNG ZUM VERARBEITEN VON FORMAL DEFINIERTEN DATEN

DEVICE FOR PROCESSING FORMALLY DEFINED DATA

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.10.2004 FR 0410736**

(43) Date de publication de la demande:
**05.09.2007 Bulletin 2007/36**

(73) Titulaire: **Progilys**
**F-75015 Paris (FR)**

(72) Inventeurs:
• **DE BECDELIEVRE, Michel**
**F-69630 Chaponost (FR)**
• **MORAND, Hervé**
**F-75116 Paris (FR)**

(74) Mandataire: **Plaçais, Jean Yves et al**
**Cabinet Netter**
**36, avenue Hoche**
**75008 Paris (FR)**

(56) Documents cités:
**WO-A-00/55766**      **US-A- 5 897 649**
**US-A1- 2004 133 567**

• **DOOLEY S S: "EDITING MATHEMATICAL CONTENT AND PRESENTATION MARKUP IN INTERACTIVE MATHEMATICAL DOCUMENTS" PROCEEDINGS OF THE 2002 INTERNATIONAL SYMPOSIUM ON SYMBOLIC AND ALGEBRAIC COMPUTATION, 7 juillet 2002 (2002-07-07), - 10 juillet 2002 (2002-07-10) pages 55-62, XP001174933 LILLE, FRANCE ISBN: 1-58113-484-3**
• **CARLISLE D: "OpenMath, mathML and XSL" SIGSAM BULLETIN, ASSOCIATION FOR COMPUTING MACHINERY, vol. 34, no. 2, juin 2000 (2000-06), pages 6-11, XP008041066 NEW YORK, USA ISSN: 0163-5824**
• **GRIVAS G: "Efficient Integration of Declarative Paradigms into Symbolic Computation Systems" PROCEEDINGS ICLP 94 OF THE POST CONFERENCE WORKSHOP ON INTEGRATION OF DECLARATIVE PARADIGMS, juin 1994 (1994-06), XP002376283 Santa Margherita, Italy Extrait de l'Internet: URL:http://citeseer.ifi.unizh.ch/grivas94e fficient.html> [extrait le 2006-04-07]**

EP 1 828 941 B1

# EP 1 828 941 B1

**Description**

L'invention a trait aux dispositifs de traitement de données et plus particulièrement à un dispositif de traitement de données, comprenant un éditeur de formule, capable d'établir une formule que obéissant à de premières règles formelles, à l'aide d'identifiants de variables, un jeu de métadonnées, capable de maintenir une correspondance entre les identifiants de variables et des données stockées en mémoire, et un générateur de code, capable d'engendrer du code exécutant la formule mathématique sur des données stockées.

Les logiciels mathématiques utilisent un langage naturel mathématique qu'ils sont capables d'interpréter pour réaliser des calculs formels mathématiques. Ils ne sont pas adaptés au traitement d'un grand volume de données. En outre, ils ne sont pas adaptés à la gestion d'indices en tant que variables non définies par exemple sous forme do fonction.

Les tableurs utilisent un langage qui leur est propre pour exprimer un traitement sur des données. Ils sont en outre limités par le volume des données qu'ils peuvent traiter.

Le document US 2004/0133567 A1 décrit des optimisations et des stratégies d'exécution pour des extensions de type tableur au langage SQL (de l'anglais "Structured Query Language", ou "langage structuré d'interrogation" en français). Des calculs à effectuer sur une base de données peuvent être définis en utilisant une syntaxe de type tableur dans une clause insérée à l'intérieur d'une requête SQL. Les calculs sont définis directement au moyen d'opérations sur les lignes et les colonnes d'un tableau rempli de données extraites de la base. La définition des calculs nécessite cependant la connaissance de la syntaxe du langage du tableur et la localisation des données sur lesquelles va porter le calcul dès la définition de ce dernier. En outre, les calculs que l'on peut définir sont limités par les possibilités de ce type de langage.

Les générateurs de codes assurent la transcription d'objets informatiques en code exécutable. Ils ne permettent pas de transformer une formule mathématique en code exécutable. Ils sont en outre destinés à des utilisateurs connaissant l'informatique.

L'invention a pour objet notamment de surmonter les inconvénients précités en proposant un dispositif de traitement de données, comprenant une unité de traitement capable d'interagir avec une base de données, la base de données comprenant des tables de données, une interface graphique utilisateur agencée pour permettre à un utilisateur d'entrer une expression mathématique. L'unité de traitement comprend un éditeur d'expression mathématique capable d'établir une représentation informatique de travail d'une expression mathématique en interaction avec l'interface graphique utilisateur, l'expression mathématique étant en langage naturel mathématique et comprenant au moins un symbole de variable mathématique complexe, ayant un indice et/ou un exposant, et un symbole mathématique agrégatif opérant avec le symbole de variable mathématique complexe, un dictionnaire de symboles agencé pour stocker de premières métadonnées concernant le symbole de variable mathématique complexe, et comprenant des informations sur la structure de tables de la base de données, un éditeur de conditions agencé pour produire une expression de condition, associée au symbole de variable mathématique complexe, l'expression de condition étant utilisable en combinaison des premières métadonnées pour sélectionner un sous-ensemble de données dans la base de données, un générateur de requêtes agencé pour traiter la représentation informatique de travail pour produire une séquence de code exécutant l'expression mathématique conformément aux règles du langage naturel mathématique et, à la reconnaissance du symbole mathématique agrégatif et du symbole de variable mathématique complexe avec lequel il opère, d'utiliser l'éditeur de conditions pour produire une expression de conditions de travail, d'utiliser les premières métadonnées pour produire du code capable d'utiliser l'expression de condition de travail pour remplir un tableau de données de travail avec ledit sous-ensemble de données, et, de combiner l'opérateur correspondant au symbole mathématique agrégatif avec le tableau de données de travail.

Le dispositif selon l'invention permet ainsi la définition d'un traitement informatique, par exemple un calculs, à réaliser sur de grands volumes de données, ledit traitement étant exprimé en langage naturel mathématique.

D'autres caractéristiques et avantages de l'invention apparaîtront à l'examen de la description détaillée ci-après, et des dessins annexés, sur lesquels :

- la figure 1 est un schéma représentant fonctionnellement les différents éléments d'une dispositif de traitement de données selon l'invention, de manière globale,
- les figures 2 à 4 sont des schéma représentant fonctionnellement des détails d'éléments de la figure 1,
- les figures 5 et 6 sont des organigrammes illustrant le fonctionnement d'un élément de la figure 1,
- la figure 7 est un organigramme détaillant l'opération 506 de la figure 5,
- la figure 8 est un organigramme détaillant l'opération 508 de la figure 8,
- la figure 8A est un organigramme détaillant l'opération 850 de la figure 8,
- la figure 9 est un organigramme qui détaille l'opération 900 de la figure 7 et de la figure 8A,
- les figures 10A, 10B et 10 C sont des organigrammes qui detaillent l'operation 1000 de la figure 9 dans différents cas,
- la figure 11 est un organigramme qui illustre le fonctionnement d'un élément du dispositif de la figure 1,
- la figure 12 est un schéma illustrant une interface graphique utilisateur d'un autre élément de la figure 1,

- la figure 13 est un organigramme illustrant le fonctionnement d'un autre élément encore de la figure 1, et
- la figure 14 est un schéma illustrant un exemple de mise en oeuvre du dispositif de traitement de données selon l'invention.

En outre :

- l'annexe 1 est un glossaire,
- les annexes 2 et 3 retranscrivent des formules mathématiques sous des formes différentes, utilisées pour la description, et
- l'annexe 4 détaille la notion de fonction de hachage.

Les dessins et les annexes à la description comprennent, pour l'essentiel, des éléments de caractère certain. Ils pourront donc non seulement servir à mieux faire comprendre la description, mais aussi contribuer à la définition de l'invention, le cas échéant.

Le présent document peut contenir des éléments susceptibles d'une protection par droit d'auteur ou copyright. Le titulaire des droits n'a pas d'objection à la reproduction à l'identique par quiconque de ce document de brevet, tel qu'il apparaît dans les dossiers et/ou publications des offices de brevet. Par contre, il réserve pour le reste l'intégralité de ses droits d'auteur et/ou de copyright.

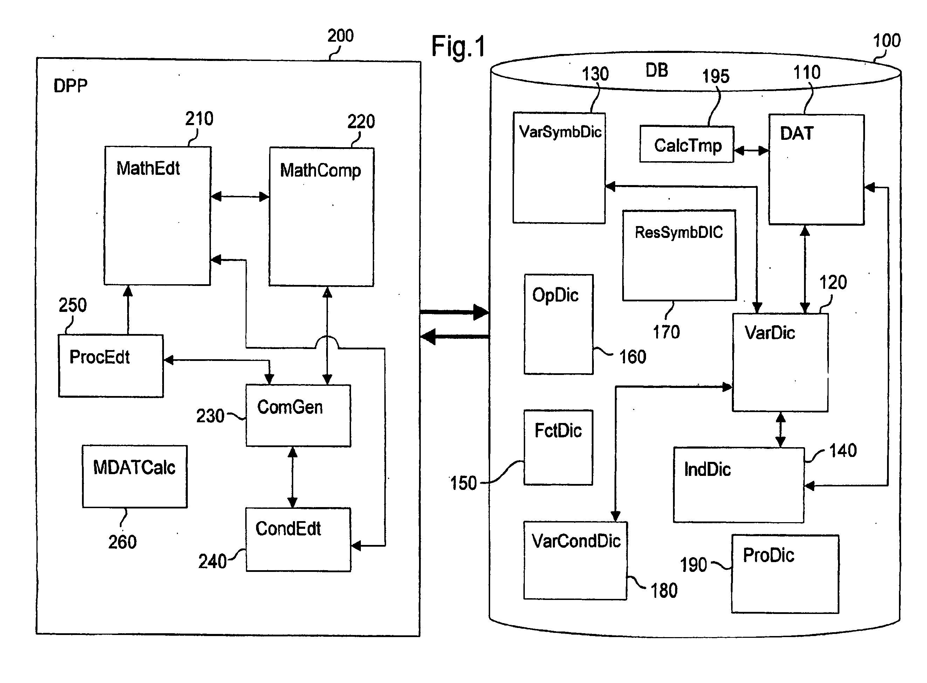

La figure 1 représente un dispositif de traitement de données selon l'invention. Le dispositif de traitement de données comprend une base de données DB 100 stockée dans la mémoire d'une unité centrale d'ordinateur non représentée sur la figure 1 et un programme de traitement des données DPP 200 exécutable dans la mémoire d'une unité centrale ordinateur non représentée. Par exemple, la base de données DB 100 et le programme de traitement des données DPP 200 peuvent être stockés dans la même mémoire d'unité centrage d'ordinateur. Une définition du terme "base de données" est donnée en annexe A.1.1.

Le programme de traitement des données DPP 200 est capable d'interagir avec la base de données DB 100 par des moyens connus de l'homme du métier pour réaliser des actions informatiques classiques. Ces actions comprennent des opérations sur les données contenues dans la base de données DB 100 comme la lecture, l'écriture, la recherche et la mise à jour et des actions sur la structure de la base de données DB 100 comme la création, la suppression de tables etc. Une définition du terme "table" est donnée en annexe A.1.2.

La base de données DB 100 contient des données à traiter DAT 110. Les données à traiter DAT 110 sont stockées de manière organisé dans une pluralité de tables contenant chacune des lignes et des colonnes comme indiqué en annexe A.1.2.

Dans la base de données DB 100, les colonnes peuvent être caractérisées en tant que colonne de clé ou colonne de type C, colonne technique ou colonne de type T, colonne quantitative ou colonne de type Q, ou encore en tant que colonne d'état ou colonne de type E.

Une définition de l'expression "colonne de clé" est donnée en annexe A.1.10. Les colonnes techniques, ou colonnes T, contiennent des données utiles au fonctionnement du dispositif selon l'invention. Par exemple, une colonne technique particulière peut contenir un identifiant d'un processeur participant au traitement des données à traiter DAT 110. Les colonnes quantitatives, ou colonnes Q, contiennent des données numériques représentant des quantités utiles à un utilisateur du dispositif selon l'invention. Les colonnes d'état, ou colonnes E, contiennent des données alphanumériques utiles à un utilisateur du dispositif.

Le programme de traitement des données DPP 200 comprend un éditeur d'expressions mathématiques MathEdt 210 permettant à un utilisateur de saisir des expressions mathématiques en langage naturel. La saisie peut se faire par l'intermédiaire d'une interface graphique utilisateur non représentée. Une définition de l'expression "langage naturel mathématique" est donnée en annexe A.1.3. En particulier, l'éditeur d'expressions mathématiques MathEdt 210 permet la saisie de formules mathématiques liant des variables, des opérations et des fonctions mathématiques. En outre, l'éditeur d'expressions mathématiques MathEdt 210 permet la saisie en langage naturel de conditions mathématiques sur ces variables. Une définition du terme "variable" est donnée en annexe A.1.4. L'annexe A.2.1 illustre pour exemple une formule mathématique exprimée en langage naturel mathématique.

Dans le dispositif selon l'invention, les variables mise en jeu dans les formules mathématiques saisies dans l'éditeur d'expressions mathématiques MathEdt 210 pointent vers des données à traiter DAT 110. Ainsi, l'une des fonctionnalités du dispositif selon l'invention est de permettre la réalisation d'un traitement sur des données de la base de données DAB 100, ledit traitement pouvant être exprimé en langage mathématique naturel.

En langage naturel mathématique, une opération est représentée par un opérateur, une variable par un symbole de variable et une fonction par un symbole de fonction. Une définition des termes "opérateur", "symbole de variable" et "symbole de fonction" est donnée dans les annexes A1.5, A.1.6 et A.1.7 respectivement. Ainsi, une formule mathématique saisie au moyen de l'éditeur d'expressions mathématiques MathEdt 210 ne contient que des symboles de variables, des symboles de fonctions et des opérateurs. L'annexe A.1.6 expose en outre une convention relative aux symboles de variables. La convention de l'annexe A.1.6 est propre au dispositif selon l'invention. L'annexe A.2.3 illustre pour exemple un symbole de variable conforme aux conventions de l'annexe A.1.6.

En outre, l'éditeur d'expressions mathématiques MathEdt210 permet la saisie de conditions d'exécution d'une formule mathématiques saisie à l'aide d'opérateurs de conditions, portant par exemple sur des symboles variables. Une liste des opérateurs de conditions pouvant être associés à une formule mathématique est données en annexe A.1.15.

L'éditeur d'expressions mathématiques MathEdt 210 est un éditeur de métalangage capable de générer une représentation d'une expression mathématique saisie en langage naturel mathématique obéissant à des règles formelles. Par exemple, l'éditeur d'expressions mathématiques MathEdt 210 peut être un éditeur MathML 2.0 capable de générer des expressions mathématiques conformes au standart MathML 2.0. Une définition du langage MathML 2.0 est donnée en annexe A.1.8. Un éditeur de ce type est connu de l'homme du métier. On connaît par exemple le logiciel WEB EQ commercialisé par la société DESIGN SCIENCE. L'annexe A.2.2 illustre la formule de l'annexe A.2.1 exprimée en métalangage MathML 2.0 et générée par l'éditeur d'expressions mathématiques MathEdt 210.

Le programme de traitement des données DPP 200 comprend en outre un compilateur d'expressions mathématiques MathComp 220 capable d'établir un arbre de compilation représentatif d'une expression mathématique en métalangage, en particulier en MathML 2.0. Différentes définitions de l'expression "arbre de compilation" sont données en annexe A.1.9.

Le compilateur d'expressions mathématiques MathComp 220 est capable d'établir un arbre de compilation ne contenant que des opérations identifiées, des symboles identifiés i.e. des variables et des conditions. Le compilateur d'expressions mathématiques MathComp 220 sera considéré plus en détail dans la suite de la présente description.

Le programme de traitement des données DPP 200 comprend en outre un générateur d'instructions ComGen 230 capable d'établir à partir d'un arbre de compilation contenant des opérations identifiées, des variables et des conditions, une liste de tables concernées et des jointures entre lesdites tables concernées et des données à traiter DAT 110. En outre, le générateur d'instructions ComGen 230 est capable de générer une série d'instructions que le moteur (non représenté) de la base de données DB 100 est capable d'exécuter et correspondant à l'arbre de compilation. Le générateur d'instructions ComGen 230 est par exemple un générateur d'instructions en langage SQL.

La base de données DB 100 comprend un dictionnaire de variables VarDic 120 capable de maintenir une relation entre un identifiant de variable propre à chaque variable et un lien vers des colonnes de clé des données à traiter DAT 110, dont la combinaison permet de définir de manière unique cette variable. Une définition du terme colonne de clé est donnée en annexe A.1.10. Dans ce paragraphe, le terme variable s'entend au sens défini en annexe A.1.4.2. En option, le dictionnaire de variables VarDic 120 est capable de préciser pour chaque variable, s'il s'agit d'une variable clé ou non.

La base de données DB 100 comprend en outre un dictionnaire des symboles de variables VarSymbDic 130 capable de maintenir, pour certaines au moins des variables, une relation entre ces variables du dictionnaire des variables VarDic120 et des symboles de variables. Le dictionnaire des symboles de variables VarSymbDic 130 mémorise pour chaque variable concernée, une représentation en métalangage, par exemple en MathML 2.0, d'un symbole de variable décomposé comme décrit ci-après.

Selon la convention exposée en annexe A.1.6, un symbole de variable comprend visuellement une première suite de caractères formant nom de variable, une seconde suite de caractères disposée en exposant et une troisième suite de caractères disposée en indice. Les seconde et troisième suites de caractères sont optionnelles. La troisième suite de caractères peut comprendre plusieurs suites de caractères séparées entre elles par le caractère virgule ",", chaque suite de caractères formant alors un indice. L'annexe A.2.3 montre un symbole de variable conforme à la convention de l'annexe A.1.6.

En outre, la base de données DB 110 comprend un dictionnaire d'indices IndDic 140, capable de maintenir, pour chaque variable concernée, une relation entre l'identifiant de variable et une liste d'indices associés. Le dictionnaire d'indices IndDic 140 maintient pour chacun des indices associés à une variable particulière, un lien entre l'indice et l'une des colonnes de clé des données à traiter DAT 110 définissant cette variable.

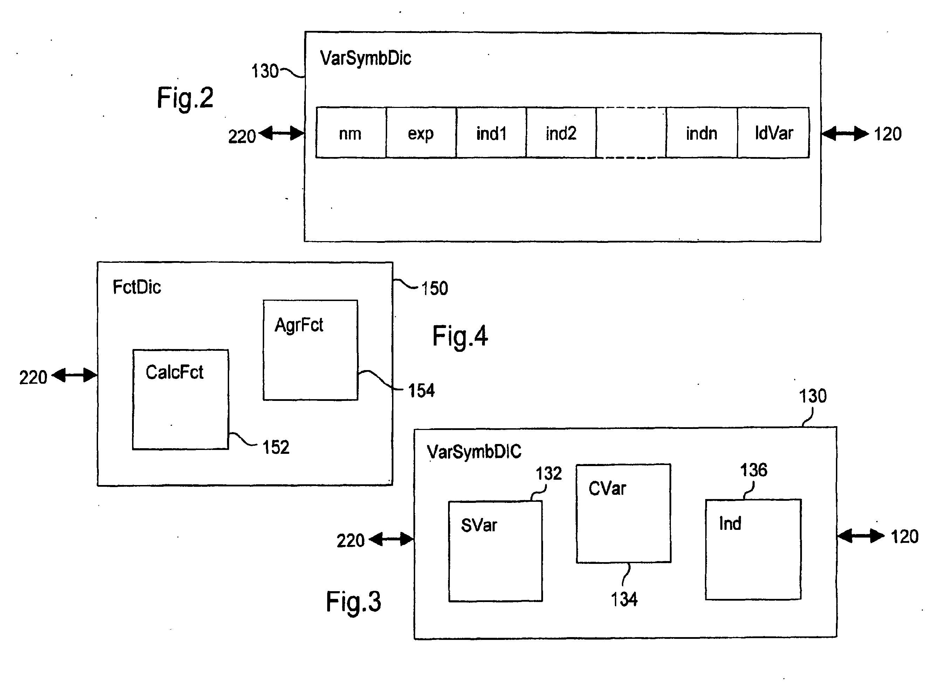

La figure 2 illustre de manière logique le stockage des symboles de variables dans le dictionnaire des symboles de variables VarSymbDic 130. Une ligne mémorise un symbole associé à une variable en stockant dans une première colonne la première chaîne de caractères (case *nm*), la seconde suite de caractères dans une seconde colonne (case *exp*) et chacune des chaînes de caractères de la troisième chaîne de caractères dans des colonnes distinctes (cases *ind1, ind2* et suivantes). Le dictionnaire des variables VarSymbDic 130 maintient également un lien entre un identifiant de variable (case *IdVar*) associé à un symbole de variable et la zone du dictionnaire des variables VarDic 120 relative à cette variable.

L'annexe A.2.4 illustre l'expression du symbole de variable de l'annexe A.2.3 en MathML 2.0. En annexe A.2.4.1, on remarque la balise <msubsup> introduisant un symbole à indice et exposant. Le nom de la variable, l'indice et l'exposant sont chacun introduits par des balises <mrow> de même niveau hiérarchique, ce niveau étant juste inférieur à celui de la balise <msubsup> comme le montrent respectivement les annexes A.2.4.2, A.2.4.3 et A.2.4.4. On note que chaque suite de caractères est encadrée par le couple de balises <mi> et </mi>.

Comme l'indique la figure 1, la base de données DB 100 comprend un dictionnaire des symboles de fonction FctDic 150 maintenant une liste de fonctions mathématiques qu'il est possible de mettre en oeuvre, en particulier sur des variables. Chaque fonction est mémorisée en relation avec un symbole de fonction exprimé en métalangage, par exemple en MathML 2.0. En langage MathML 2.0, les symboles de fonction sont repérés par des balises spécifiques. Par exemple, la balise <msqrt> représente la fonction racine carrée.

La base de données DB 100 comprend en outre un dictionnaire des opérations OpDic 160 maintenant une relation entre opérateurs et opérations. En langage MathML 2.0, un opérateur est introduit par un couple de balises <mo></ /mo>. Par exemple, <mo> + < /mo> introduit l'opérateur de l'addition.

La base de données DB 100 comprend enfin un dictionnaire des symboles réservés ResSymb 170 par le dispositif. Les symboles réservés n'apparaissent dans aucun autre dictionnaire de symbole.

La figure 3 précise la structure du dictionnaire des symboles de variables VarSymbDic 130. Le dictionnaire des symboles de variables VarSymDic 130 comprend une table des symboles simples SVar 132. Un symbole simple est un symbole sans indice ni exposant. Dans ce cas, seule la première chaîne de caractères est mémorisée (case *nm*). Le dictionnaire des symboles de variable VarSymbDic 130 comprend également une table des symboles complexes CVar 134. Un symbole complexe est un symbole présentant un ou plusieurs indices et/ou un exposant.

La figure 4 précise la structure du dictionnaire des symboles de fonctions FctDic 150. Le dictionnaire des symboles de fonctions FctDic 150 comprend une table des fonctions de calcul CalcFct 152 et une table des fonctions agrégatives AgrFct 154. Une définition des expressions "fonction de calcul" et "fonction agrégative" est donnée respectivement en annexes A.1.11 et A.1.12.

Le programme de traitement des données DPP 200 comprend en outre une éditeur de conditions CondEdt 240 capable d'interagir avec le dictionnaire des variables VarDic 120, le dictionnaire des indices IndDic 140 et le générateur de code ComGen 230. L'éditeur de conditions est capable d'associer à une variable contenue dans le dictionnaire des variables VarDic 120 des conditions sur la valeur de ses colonnes de clé. De la même manière, l'éditeur de conditions CondEdt 240 est capable d'associer des conditions à un indice contenu dans le dictionnaire des indices IndDic 140. Les conditions sont mémorisées dans un dictionnaire des conditions sur variable VarConDic 180 de la base de données DB 100. De préférence, l'éditeur de conditions CondEdt 240 est un éditeur de type graphique capable d'afficher pour une variable sélectionnée, la liste des colonnes de clé définissant cette variable. Avantageusement, l'éditeur de conditions CondEdt 240 est dans ce cas capable d'interagir avec l'éditeur d'expressions mathématiques MathEdt 210 pour permettre la sélection d'une variable directement à partir de cet éditeur d'expressions mathématiques.

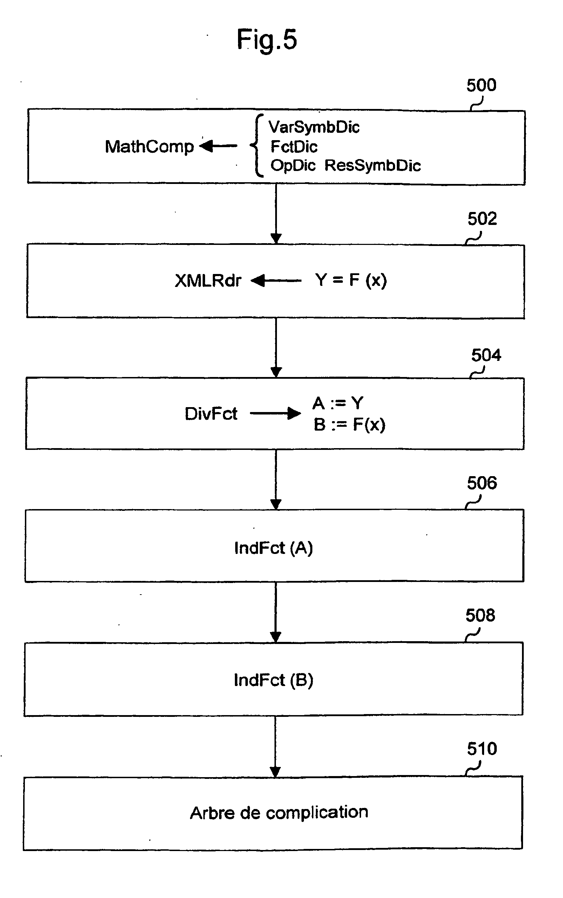

L'organigramme de la figure 5 détaille le fonctionnement du compilateur d'expressions mathématiques MathComp 220 pour une expression mathématique de type formule saisie dans l'éditeur d'expressions mathématiques MathEdt 210. Une formule peut être exprimée en langage naturel mathématique et sous forme générique par l'équation Y=F(X). L'annexe A.3.1 donne un exemple de formule mathématique exprimée en langage naturel mathématique. La variable symbolisée Y est dite variable de sortie tandis que la variable symbolisée X est dite variable d'entrée. Une formule mathématique peut comporter plusieurs variables d'entrée.

À l'opération 500, le compilateur d'expressions mathématiques MathComp 220 charge en mémoire les différents dictionnaires de symboles, c'est-à-dire le dictionnaire des symboles de variables VarSymbDic 130, le dictionnaire des symboles de fonctions FctDic 150, le dictionnaire des opérateurs OpDic 160 et le dictionnaire des symboles réservés ResSymbDic 170.

À l'opération 502, le compilateur d'expressions mathématiques MathComp 220 charge l'expression en langage MathML 2.0 de la formule Y=F(X). L'annexe A.3.2 illustre l'expression en MathML 2.0 de la formule de l'annexe A.3.1 telle que chargée par le compilateur d'expressions mathématiques MathComp 220.

L'expression est chargée par l'intermédiaire d'un lecteur de métalangage XMLRdr. Le lecteur de métalangage XMLRdr est capable d'établir une représentation simplifiée sous forme d'arbre d'une expression conforme au standard XML. Dans une telle représentation, les noeuds de l'arbre sont les balises XML composant l'expression. Chaque balise présentant comme argument une chaîne de caractères.

Ainsi le lecteur de métalangage XMLRdr est capable d'établir une représentation en arbre XML d'une expression mathématique en MathML 2.0. Un exemple d'une telle représentation est illustrée en annexe A.3.3 dans le cas de la formule de l'annexe A.3.1. Chaque noeud correspond à une balise MathML 2.0. On note que chaque noeud présente un niveau hiérarchique.

À l'opération 504, le compilateur d'expressions mathématiques MathComp 220 appelle une fonction de division DivFct. La fonction de division est capable de localiser l'opérateur "=" de l'expression Y=F(X) dans l'arbre XML par la recherche de l'expression mo ("="). En option, la fonction division DivFct vérifie la présence d'un unique opérateur de ce type dans l'arbre XML. La fonction division DivFct scinde l'arbre en une partie sortie A et une partie entrée B correspondant respectivement aux parties de l'arbre MathML situées au-dessus'et en dessous de l'expression mo ("="). Les annexes A.3.3.1, A.3.3.2 et A.3.3.3 illustrent cette division. L'annexe A.3.3.1 illustre la partie A tandis que l'annexe A.3.3.3 illustre la partie B. On note qu'une formule mathématique pourrait également être définie sous la forme F(X)=Y sans que cela change fondamentalement le fonctionnement du compilateur d'expressions mathématiques MathComp 220.

Le compilateur d'expressions mathématiques MathComp 220 commence le traitement en appelant pour la partie A une fonction d'identification IndFct à l'opération 506. La fonction d'identification IndFct dont le fonctionnement sera décrit plus en détail ci-après est capable d'identifier le symbole de variable représenté par la partie A.

Le compilateur d'expressions mathématiques MathComp 220 poursuit le traitement de l'arbre par l'appel de la fonction d'identification IndFct pour la partie B à l'opération 508. La fonction IndFct est capable d'identifier les symboles de variables contenus dans la partie B ainsi que les symboles de fonctions et les opérateurs.

À l'opération 510, le compilateur d'expressions mathématiques MathComp 220 génère l'arbre de compilation à partir des symboles de variables et de fonctions et des opérateurs. L'annexe A.3.4 montre l'arbre de compilation correspondant à la formule de l'annexe A.3.1.

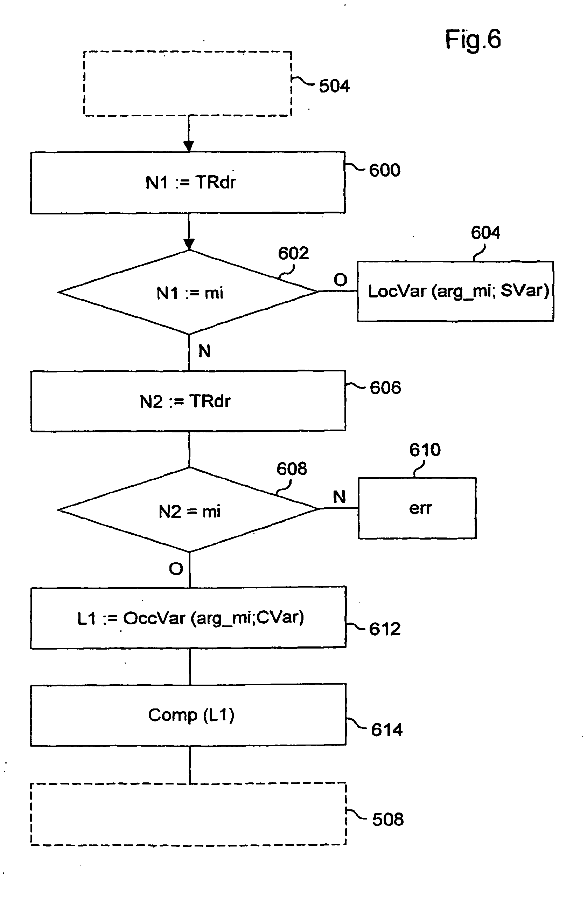

La figure 6 illustre en détail l'opération 506 de la figure 5. À l'opération 600, la fonction d'identification IndFct appelle une sous-fonction de lecture d'arbre TRdr laquelle renvoie la première balise N1 de niveau 1 dans l'arbre. À l'opération 602, on teste si cette première balise N1 est de type mi.

- Si oui, alors la partie A représente un symbole simple au sens exposé ci-dessus. Une fonction de localisation LocFct est appelée avec pour paramètres :

    - l'argument *arg_mi* de la balise mi, et
    - un identidiant de la table dans laquelle localiser *arg_mi,* c'est-à-dire de la table des symboles simples SVar 132.

    La fonction de localisation LocFct renvoie l'adresse dans les données à traiter DAT 110 associée à la ligne contenant *arg_mi* dans la *mn* (opération 604) et donnée par le dictionnaire de variables VarDic120.

- Sinon, la première balise trouvée N1 est du type msub, msup ou msupsub, c'est-à-dire que la partie A représente un symbole complexe. La fonction de lecture TRdr est alors appelée pour renvoyer la balise de niveau hiérarchique inférieur N2 suivant immédiatement le noeud N1 (opération 606).

À l'opération 608, on teste si le noeud N2 est de type mi.

- Sinon, il y a une erreur (opération 610).
- Si oui (opération 612), une fonction de recherche d'occurrence OccVar est appelée avec pour paramètres l'argument *arg_mi* de la balise mi et un identifiant de la table dans laquelle localiser *arg_mi,* c'est-à-dire la table des symboles complexes CVar 134. La fonction de recherche d'occurrence OccVar renvoie une liste L1 constituée de la partie de la table des symboles complexes CVar 134 dont la case *nm* contient *arg_mi.*

À l'opération 614, on appelle une fonction comparaison CompFct qui compare chaque élément de la liste L1 avec la suite de l'arbre afin d'identifier la variable désignée.

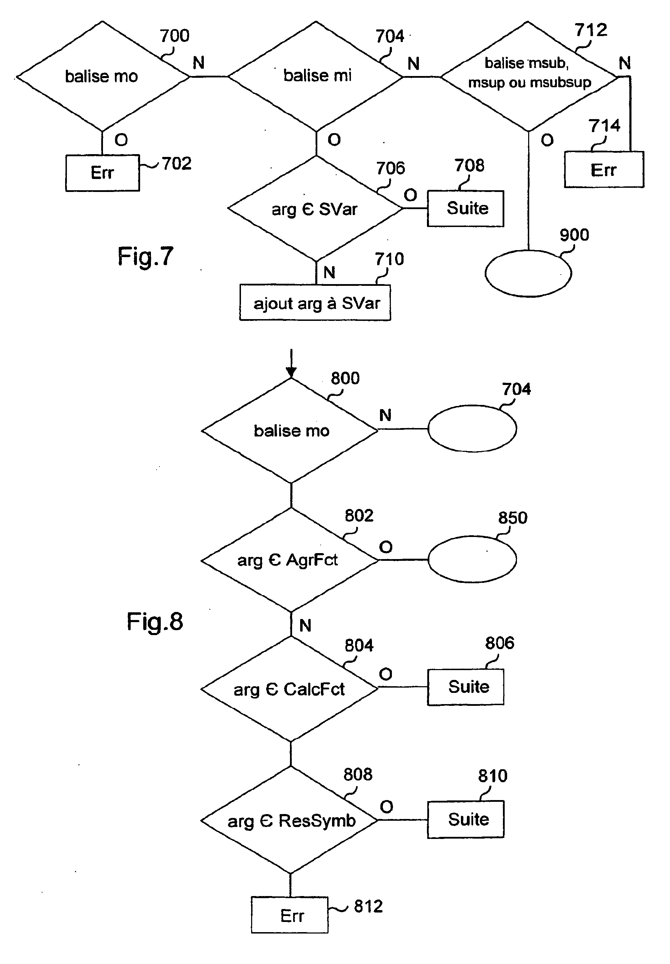

La figure 7 est un organigramme qui illustre le traitement par le compilateur d'expressions mathématiques MathComp 220 de la partie A d'une équation obtenue sortie de l'éditeur de formules mathématiques MathEdt 210 et après lecture par le lecteur de métalangage XMLRdr. Autrement dit la figure 7 détaille l'opération 506 de l'organigramme de la figure 5.

Le programme de compilation d'expressions mathématiques Mathcomp 220 comprend une liste de balises dites "frontières" qu'il est capable de lire de manière récursive dans l'arbre correspondant à la partie A. La liste des balises frontières comprend, en particulier, les balises MathML 2.0 suivantes :

- mrow,
- mi,
- mo,
- mn,
- msub, msup et msubsup.

La lecture de l'arbre par le compilateur d'expressions mathématiques MathComp 220 se fait de manière récursive en lisant chacun des noeuds d'un même niveau hiérarchique depuis le haut vers bas de l'arbre puis en recommençant pour les noeuds de niveau hiérarchique inférieur.

Le compilateur d'expressions mathématiques MathComp 220 lit la première balise frontière de l'arbre A. À l'opération 700, on teste si cette première balise frontière lue est une balise de type mo. En langage MathML 2.0, une balise de type mo définit un opérateur mathématique. Si oui, à l'opération 702, un signal d'erreur est émis, car la partie A correspond à une variable de sortie seule et n'admet donc pas de symbole d'opération à ce niveau hiérarchique.

Sinon, à l'opération 704, on teste si cette première balise frontière est de type mi. Une balise de type mi en langage MathML 2.0 définit un identifiant, c'est-à-dire une chaîne de caractères sans signification mathématique particulière.

Si oui, on vérifie que l'argument de cette balise mi appartient au dictionnaire des symboles simples SVar 132 à l'opération 706. Plus précisément, on cherche cet argument dans les cases *nm* du dictionnaire des symboles simples SVar 132.

Si oui, le symbole simple identifié par la balise mi est complètement défini (i.e. il existe un lien entre ce symbole simple et la variable du dictionnaire des variables VarDic 130 à laquelle il correspond et donc vers les données des données à traiter DAT 110 correspondantes). Le traitement se poursuit alors en 708. Sinon, l'argument de cette balise mi peut être ajouté à la table des symboles simples SVar 132, à l'opération 710, et une variable correspondante créée.

Si à l'opération 704, la première balise frontière lue n'est pas de type mi, alors à l'opération 712, on teste si cette balise est de type msub, msup ou msubsup. Autrement dit, on teste si la balise lue définit un symbole à indice seul, à exposant seul, ou à indice et exposant, respectivement. Sinon, une erreur est émise à l'opération 714 car aucune des balises permises à cet endroit de l'équation n'a été lue. Si une balise de type msub, msup ou msubsup a été trouvée à l'opération 712, alors le traitement se poursuit à l'opération 900 comme il sera décrit plus loin. Il s'agit alors d'un symbole complexe au sens exposé plus haut.

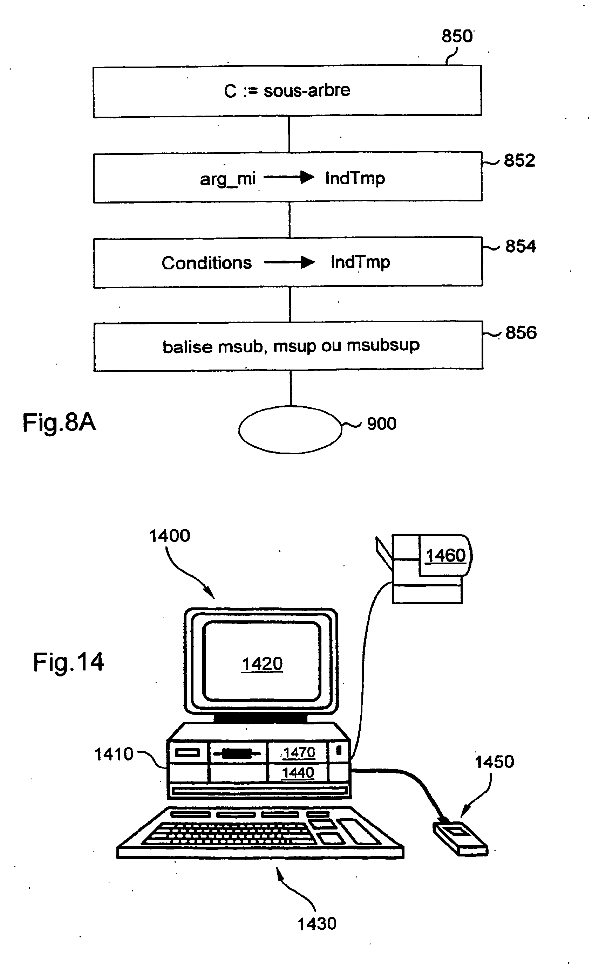

La figure 8 est un organigramme illustrant le traitement de la partie B d'une équation mathématique obtenue en sortie de l'éditeur de formules mathématiques MathEdt 210 par le compilateur d'expressions mathématiques MathComp220 et après lecture par le lecteur de métalangage XMLRdr. Autrement dit, la figure 8 détaille l'opération 508 de l'organigramme de la figure 5. Le compilateur d'expressions mathématiques MathComp 220 lit de manière récursive chaque balise frontière d'abord selon le niveau hiérarchique, ensuite de haut en bas.

À l'opération 800, on teste si la première balise frontière lue est de type mo. Si oui, cette balise définit un symbole d'opérateur associé à une fonction qui doit être identifiée. Sinon, cette balise est soit une balise de type mi, soit une balise de type msub, msup ou msubsup. Dans ces deux cas, on est ramené au traitement de balises de type msub, msup oumsubsup tel que décrit plus haut et illustré par la figure 7 (opérations 704 et suivantes).

Dans le cas où la première balise frontière lue est une balise de type mo, à l'opération 802, on vérifie si l'argument de cette balise est contenu dans le dictionnaire des fonctions agrégatives AgrFct 154.

Si oui, un traitement spécifique est réalisé, lequel débute à l'opération 850 de l'organigramme de la figure 8A. Ce traitement sera décrit plus loin.

Sinon, on vérifie à l'opération 804 que l'argument de la balise mo est contenu dans le dictionnaire des fonctions de calcul CalcFct 152. Si oui, la fonction est identifiée et le traitement se poursuit en 806. Sinon, à l'opération 808, on vérifie si l'argument de cette balise appartient au dictionnaire des symboles réservés ResSymbDic 170. Si oui, la fonction est complètement identifiée et le traitement se poursuit en 810. Sinon, un message d'erreur est émis à l'opération 812.

La figure 8A est un organigramme illustrant le traitement spécifique mis en oeuvre lorsqu'un symbole de fonction agrégative a été lu à l'opération 802. Le traitement débute à l'opération 850 par l'extraction du sous-arbre concerné par le symbole de fonction agrégative. Ce sous-arbre est constitué de l'ensemble des balises situées sous la balise de type mo et de niveau hiérarchique inférieur ou égal. Un tel sous-arbre sera appelé par la suite partie C.

À l'opération 852, la première balise mi suivant immédiatement la balise de type mo considérée à l'opération 802 est lue (au sens d'une lecture de haut en bas sans distinction de niveaux hiérarchiques). L'argument de cette balise mi introduit une chaîne de caractères formant le nom d'un indice d'agrégation. Le nom de cet indice d'agrégation est stocké dans une table d'indices temporaire IndTmp dans une case *nm.*

À l'opération 854, on extrait les conditions sur cet indice. Les conditions sur cet indice sont introduites par des balises de type mo. Les conditions sont stockées dans la table d'indices temporaire IndTmp non représentée associées au nom de l'indice *nm.*

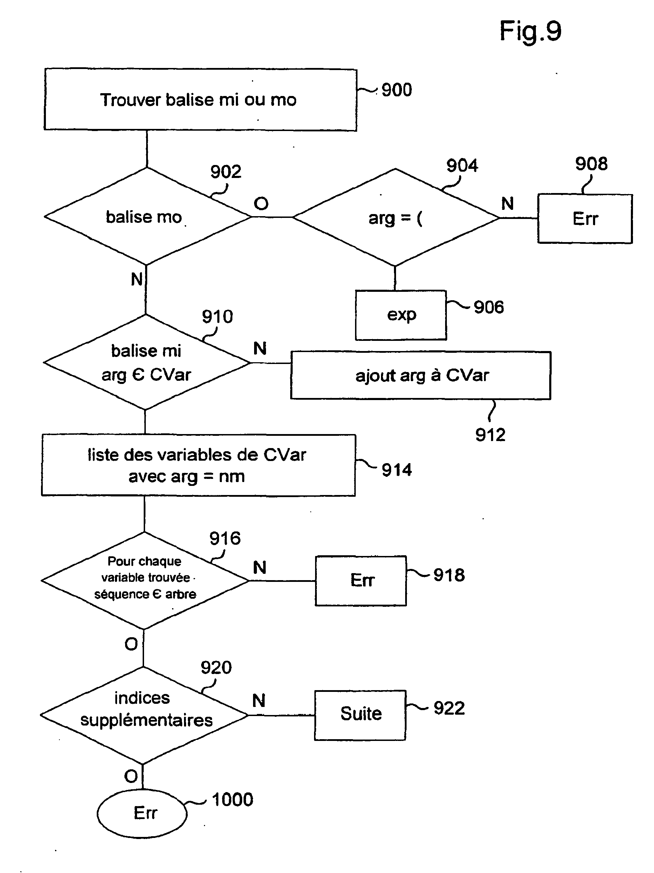

Les balises de type msub, msup, ou msubsup suivant immédiatement le symbole d'agrégation découvert à l'opération 802 sont lues. Ces balises définissent des symboles de variables complexes sur lesquelles peut porter la fonction agrégative. Ces balises font l'objet d'un traitement spécifique lequel sera décrit plus loin. Ce traitement débute par une opération 900 illustrée sur la figure 9. Ce traitement est destiné à identifier les variables concernées.

La figure 9 est un organigramme illustrant le traitement de symboles de variables complexes, c'est-à-dire comprenant des indices et/ou des exposants. Autrement dit, la figure 9 expose le traitement des balises de type ms ub, msup etmsubsup par le compilateur d'expressions mathématiques MathComp 220.

Dans le cas où une telle balise est lue, par exemple à l'opération 712 de l'organigramme de la figure 7 ou à l'opération 856, le traitement mis en oeuvre est le suivant. À l'opération 900, on lit la première frontière de type mi ou de type mo. La lecture se fait alors suivant la succession des balises, indépendamment des niveaux hiérarchiques.

Si la première balise lue est de type mo (opération 902), alors on vérifie à l'opération 904 si l'argument de cette balise est une parenthèse ouverte "(". Si oui, il s'agit non pas d'une variable mais de la fonction exponentielle qui est alors identifiée (opération 906). Sinon, un message d'erreur est émis à l'opération 908.

Si la première balise trouvée n'est pas de type mo (opération 902), alors la première balise trouvée est de type mi (opération 910). On vérifie alors que l'argument de cette balise est contenu dans le dictionnaire des symboles complexes CVar 134, toujours à l'opération 910. Plus précisément, on cherche l'argument de cette balise dans les cases *nm* du dictionnaire des symboles complexes CVar. Sinon, à l'opération 912, on prévoit l'ajout éventuel de cet argument à la table des symboles complexes Cvar 134 sous une case *mn* et la création d'une nouvelle variable dans le dictionnaire des variables VarDic 120.

Dans le cas contraire, à l'opération 914 on émet une liste des variables contenues dans le dictionnaire des symboles complexes CVar 134 dont le nom stocké sous la case nm vaut l'argument de la balise mi. Cette liste émise contient pour chaque symbole de variable, l'ensemble des chaînes de caractères formant l'exposant exp et/ou les indices *ind1, ind2,* etc.

À l'opération 916, on vérifie pour chaque variable émise si la succession des balises MathML (types et arguments à l'identique) de cette variable est conforme à la successions des balises lues dans la portion de l'arbre en cours de lecture.

Si aucune variable émise ne se retrouve dans l'arbre Iu, alors à l'opération 918 une erreur est émise. On peut egalement prévoir par exemple qu'à l'opération 918 le compilateur d'expressions mathématiques MathComp 220 stocke par exemple la partie de la formule non retrouvée dans dictionnaire des symboles complexes CVar en métalangage. Dans ce cas, les messages d'erreur de l'opération 918 ne sont pas émis. Ceci permet de définir ultérieurement la variable correspondant an symbole en question.

Si la succession des balises MathML pour une variable émise a été retrouvée, alors à l'opération 920 on vérifie si des indices supplémentaires (c'est-à-dire non-stockés avec la variable dans le dictionnaire des variables complexes CVar 134) sont définis dans l'arbre. Si oui, un traitement particulier est mis en oeuvre, lequel débute par une opération 1000 et sera décrit plus loin. Sinon, la variable est complètement identifiée et les données des données à traiter DAT 110 associées sont localisées par l'intermédiaire du dictionnaire des variables VarDic 130.

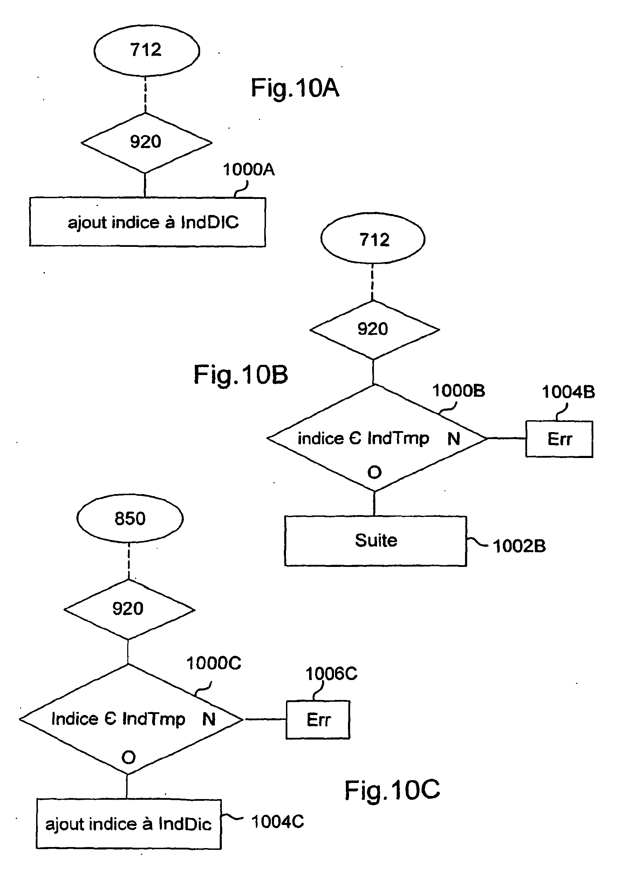

La figure 10A précise le traitement réalisé après l'opération 920 de la figure 9 dans le cas où l'on traite une partie A. Si on traite la partie A et que des indices ne sont pas présents dans le dictionnaire des symboles de variables VarSymbDic130 alors le programme propose à l'utilisateur d'ajouter l'indice an dictionnaire des indices IndDic à l'opération 1000A.

La figure 10B précise le traitement réalisé après l'opération 920 de la figure 9 dans le cas où l'on traite une partie B. Si on traite la partie B et que des indices ne sont pas présents dans le dictionnaire des symboles de variables VarSymbDic130 alors le programme vérifie à l'opération 1000B si l'indice est contenu dans la table des indices temporaires IndTmp. Si oui, l'indice est présent dans le symbole de la variable d'entrée et donc l'indice est identifié (opération 1002B). Sinon, le programme émet une erreur à l'opération 1004B.

La figure 10C précise le traitement réalisé après l'opération 920 de la figure 9 dans le cas où l'on traite une partie C. Si on traite la partie C et que des indices ne sont pas présents dans le dictionnaire des symboles de variables VarSymbDic130 alors le programme vérifie à l'opération 1000C si l'indice est contenu dans la table des indices temporaires IndTmp. Si ou, l'indice est soit présent dans le symbole de la variable d'entrée soit présent dans l'opérateur d'agrégation. Dans ces deux cas, l'indice est identifié et on ajoute l'indice au dictionnaire des indices IndDic 140 à l'opération 1002C. Sinon, le programme émet une erreur à l'opération 1004C.

Les tests des opérations 1000B et 1000C et les messages d'erreur des opérations 1004B et 1004C assurent que, par exemple, une variable A définie comme dépendant d'un indice i soit désignée $A_i$. Ceci pourrait être généralisé à des variables à plusieurs indices et/ou exposants. Ces opérations garantissent en autres choses une clarté dans l'expression formelle d'une formule mathématique, notamment lorsque celle-ci définit une variable.

Par exemple, on pourrait admettre la notation A pour une variable dépendant de i, i.e. l'indice i serait ajouté au dictionnaire des indices IndDic et l'émission de messages d'erreur des opérations 1004B et 1004C pourrait être omise.

Par example encore, l'indice i ne serait ajouté au dictionnaire des indices IndDic mais l'émission de messages d'erreur des opérations 1004B et 1004C serait omise. Dans ces exemples, le compilateur d'expressions mathématiques MalhComp 220 serait agencé pour conserver une expression de la partie de la formule concernée par l'indice i en métalangage sous forme d'arbre. Lorsque le compilateur d'expressions mathématiques traite une formule plus générale incluant la précédente formule, il intègre l'arbre précédemment mémorisé à l'arbre qu'il est en train de construire.

On comprend que le dictionnaire des indices IndDic peut ne pas maintenir, une association entre l'indice et des valeurs numériques de la base de données DB 100, au moins dans un premier temps. Le dictionnaire des indices IndDic est alors un dictionnaire ouvert qui être complété ultérieurement, par exemple lorsque le compilateur d'expressions mathématiques MathComp 220 agit sur une formule précisant les valeur numériques de l'indice en question. Le compilateur d'expressions mathématiques MathComp 220 est capable de réagir à l'absence de valeurs définies de l'indice en mémorisant la partie de la formule concernée en métalangage.

Comme exemple, on considère une variable A, définie en fonction d'un indice i (par exemple, $A_i$=1+i). L'indice i sera mémorisé dans le dictionnaire des indices IndDic et dans le dictionnaire des symboles de variables VarSymbDic. Cependant le compilateur d'expressions mathématiques MathComp 220 a terminé le traitement de la formule définisant $A_i$, il n'existe pas dans le dictionnaire des indices IndDic d'association entre l'indice i et des valeurs numériques. On considère maintenant que le compilateur d'expressions mathématiques MathComp 220 traite une formule incluant $A_i$

et précisant i (par exemple, $B = \sum_{i=1}^{i=10} A_i$). Le compilateur d'expressions mathématiques MathComp 220 complète la définition de i dans le dictionnaire des indices IndDic en associant l'indice aux valeurs numériques présentes dans cette formule.

Avantageusement, les opérations d'insertion et de recherche dans des tables exposées plus haut sont mises en oeuvre par la méthode du hachage, laquelle permet de réduire les temps de recherche et d'insertion de données dans des tables. La méthode du hachage est connue de l'homme du métier et exposée de manière succincte en annexe 4. Les variantes de hachage par adressage ouvert et de hachage par chainage, exposées respectivement en annexes 4.3 et 4.4, peuvent être employées dans le dispositif selon l'invention. De préférence, on met en place un hachage par chaînage.

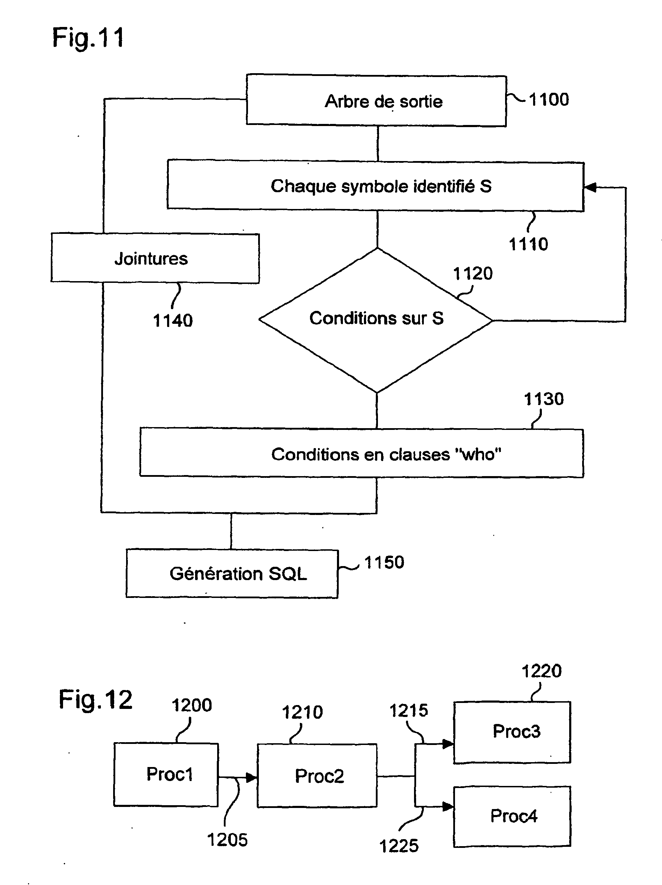

La figure 11 illustre sous forme d'organigramme le fonctionnement du générateur d'instructions ComGen 230. À l'opération 1100, le générateur d'instructions ComGen 230 récupère l'arbre de compilation du compilateur d'expressions mathématiques MathComp 220. À l'opération 110. le générateur d'instructions ComGen 230 début un traitement particulier lequel est réalisé sur chacune des variables identifiées, appelée de manière générale S. Le générateur d'instructions ComGen 230 interagit avec l'éditeur de conditions CondEdt 240 pour connaître les conditions associées à la variable S, au cours de l'opération 1120. Si aucune condition n'est associée à la variable S alors le traitement est réalisé pour la variable suivante. Sinon, à l'opération 1130 les conditions sont transformées en clauses "where".

parallèlement, le générateur d'instructions ComGen 230 réalise les jointures à partir des contraintes structurelles et des contraintes logiques, issues des relations entre les tables, définies sur la structure de la base, lesquelles sont équivalents à des indices implicites, et des indices explicites, au cours de l'opération 1140.

À l'opération 1150, le générateur d'instruction établit une suite d'instructions, ou code, aptes à être interprétées par le moteur de la base de données DB 100. Une fois les couples tables-variables identifiés, le générateur d'instructions ComGen 230 peut créer eventuellement une ou plusieurs tables temporaires de calcul CalcTmp 195. En particulier, ces tables temporaires de calcul CalcTmp 195 sont crées lorsque le générateur d'instructions ComGen 230 trouve dans une expression (i.e. un ensemble de noeuds de l'arbre de compilation de même niveau hiérarchique), une opération trop complexe pour pouvoir être effectuée au moyen d'une seule requête.

À titre d'exemple, dans le cas particulier d'instruction exprimées en sol une expression de type select "a+sum (b) ", avec par exemple a et b deux colonnes et sum ( ) la fonction addition des lignes d'une colonne, ne peut être utilisée, car elle combine des éléments de niveaux ensemblistes différents.

En particulier, la présence dans une expression d'un appel à une fonction pouvant contenir des requêtes, ou d'une fonction agrégative, implique l'utilisation d'une table temporaire CalcTmp 195 pour permettre la décomposition de l'expression en étapes successives. les tables temporaires CalcTmp remplacées par exemple par des curseurs pointant vers les donnes concernées.

Le programme de traitement des données DPP 200 comprend en outre un éditeur de traitements ProEdt 250. L'éditeur de traitements ProEdt 250 est un éditeur graphique permettant à un utilisateur de définir un enchaînement structure de traitements à appliquer sur des données des données à traiter DAT 110. Chacun des traitement peut être défini sous la forme d'une formule mathématique saisie par l'intermédiaire de l'éditeur de formules mathématiques MathEdt 210. Comme l'illustre la figure 12, chaque traitement Proc1, Proc2 etc. est représenté par une boîte de traitement 1200, 1210 etc. respectivement. Les traitements sont reliés entre eux par des flèches, lesquelles définissent un enchaînement des traitements. À titre d'exemple, sur la figure 12, la flèche 1205 permet à l'utilisateur de définir que le traitement Proc2 1210 doit être réalisé après le traitement Proc 1 1200. Les flèches 1215 et 1225 établissent que les traitements Proc3 et Proc4 respectivement sont à réaliser après le traitement Proc2. Les flèches 1215 et 1225 ayant la même origine les traitements Proc3 et Proc4 sont à réaliser en parallèle.

L'éditeur de traitements ProEdt 250 interagit avec un dictionnaire des traitements ProcDic 190 de la base de données DB 100. Le dictionnaire des traitements ProcDic 190 est capable de maintenir un lien entre une représentation d'une formule mathématique et un identifiant de formule, propre à chaque formule stockée. De manière avantageuse, le dictionnaire des traitements ProcDic 190 peut également contenir des formules préétablies et réutilisables par l'utilisateur.

Une formule mathématique peut être stockée dans le dictionnaire des traitements ProcDic 190 sous forme d'une représentation en métalangage, par exemple MathML 2.0, provenant par exemple de l'éditeur d'expressions mathématiques MathEdt 210. En outre, une formule mathématique peut être stockée sous forme d'arbre interprété, par exemple par le compilateur d'expressions MathComp 230, en particulier avec les liaisons entre les symboles de variables et les variables des données à traiter DAT 110. Bien entendu, les deux représentations peuvent cohabiter dans le dictionnaire des traitements ProcDic 190.

Dans le cas d'une exécution directe de la formule stockée, on privilégie la représentation interprétée, tandis que dans le cas d'une exécution indirecte (en parallèle d'une autre formule par exemple), on privilégie la représentation sous forme de métalangage.

Le dispositif selon l'invention permet la définition et le stockage d'une première formule de forme Y=f(X), où *f* représente une fonction quelconque, et d'une seconde formule de forme Z=g(Y), où g représente également une fonction quelconque en métalangage. Lors de la génération du code destiné à permettre le calcul de Z, le générateur d'instructions ComGen 230 recompose la formule en Z=h(X) en utilisant une définition de Y au moyen de métadonnées. Autrement dit, la variable Y n'a pas besoin d'être stockée sous forme numérique dans la base de données DB 100. La variable Y est plutôt stockée sous la forme d'un arbre d'instruction partiellement interprété, ledit arbre d'instructions étant inséré dans l'arbre d'instructions résultant de l'interprétation de Z en lieu et place de la variable Y. L' éditeur de traitements ProEdt 250 est capable de maintenir pour chaque boîte un lien entre une boîte particulière et un identifiant de formule du dictionnaire des traitements ProcDic 190. En outre l'éditeur de traitements ProEdt 250 est capable de maintenir une liste des flèches saisies par l'utilisateur, chacune étant définie par un identifiant de formule d'origine et un identifiant de formule cible. Une boîte particulière est caractérisée comme traitement de référence à partir de laquelle une représentation de l'enchaînement peut être établi au moyen de toutes les flèches. Un système de boîtes mères décomposables en boîtes filles permet à l'utilisateur d'élaborer simplement des enchaînements complexes d'expressions traitées par le programme de traitement des données DDP 200.

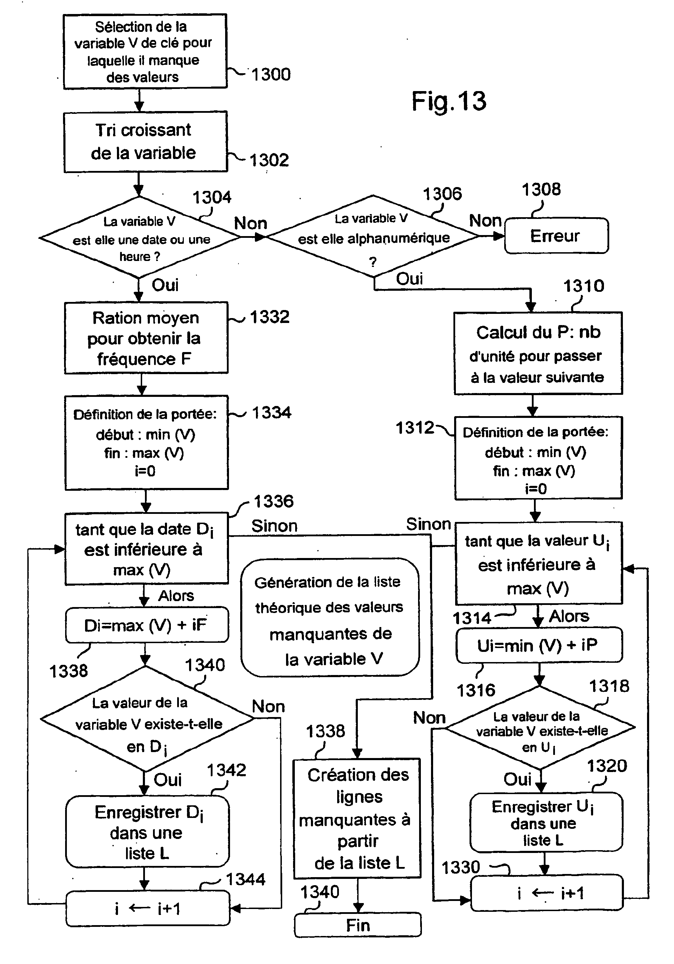

On note ici que d'autres actions informatiques non définies par des formules mathématiques peuvent être mise en oeuvre par le dispositif selon l'invention, parmi elle, un traitement particulier de calcul de données manquantes, lequel est illustré sur la figure 13.

La figure 13 est un organigramme illustrant le fonctionnement d'un calculateur de données manquantes MDATCalc 260 intégré dans le programme de traitement des données DDP 200. Le calculateur de données manquantes MDATCalc 260 est capable d'interagir avec le dictionnaire des variables VarDic 120 pour sélectionner une variable de clé désignée ici V pour laquelle il manque des valeurs (opération 1300). À l'opération 1302, le calculateur passe une instruction, par exemple une instruction SQL, au moteur de la base de données DB 100 pour réaliser un tri croissant de la variable. À l'opération 1304, on teste si V est de type date ou heure.

- Sinon, à l'opération 1306, on teste si V est de type alphanumérique.

    - Sinon, une erreur est émise, car le calculateur de données manquantes ne peut réaliser le traitement (opération 1308).
    - Si oui, à l'opération 1310, le calculateur établi un pas P, lequel sépare les données de la variable V.

À l'opération 1312, on définit la portée de la variable en établissant une valeur de début comme la plus petite valeur de la variable V et une valeur de fin comme la plus grande valeur de la variable V. Une variable d'incrémentation i est définie et mise à la valeur 0.

À l'opération 1314, une boucle est initiée dont la condition d'arrêt est que la valeur $U_i$ à calculer soit supérieure à la valeur de fin.

À l'opération 1316, la valeur de $U_i$ est calculée comme valant la plus petite valeur de la variable V à laquelle s'ajoute i fois le pas P calculé à l'opération 1310.

À l'opération 1318, on teste si la valeur de la variable V existe en $U_i$ :

- si oui, $U_i$ est enregistré dans une liste L à l'opération 1320, en 1330 on incrémente i et la boucle reprend en 1314,
- sinon, i est incrémentée de la valeur 1 en 1330 puis la boucle reprend en 1314.

Si à l'opération 1304, il est déterminé que la variable V est une date ou une heure, alors à l'étape 1332 un ratio moyen est calculé de manière à déterminer une fréquence F. À l'opération 1334, on détermine la portée de la variable V de manière analogue à l'opération 1314.

À l'étape 1336, une boucle, analogue à la boucle initiée en 1314, est initiée dont la condition de sortie est que la date $D_i$ calculée soit supérieure à la valeur maximum de la variable V max(V) déterminée en 1334. Tant que la date calculée $D_i$ est inférieure à max(V), on calcule $D_i$ comme valant la plus petite valeur de la variable V déterminée en 1334 à laquelle on ajoute i fois la fréquence F calculée en 1332. Puis les étapes 1340, 1342 et 1334 sont réalisées, lesquelles sont analogues aux étapes 1318, 1320 et 1330 respectivement.

Dans les deux cas exposés plus haut, la sortie des boucles initiées en 1314 et 1336 se poursuit en 1338 par la création des lignes manquantes à partir de la liste L établie dans les étapes 1320 successives, ou 1342. Le programme se termine en 1340.

La figure 14 illustre un exemple de mise en oeuvre du dispositif de traitement des données selon l'invention. L'ordinateur 1400 comprend une unité centrale 1410 intégrant en particulier une unité de traitement ou CPU et de la mémoire vive, un écran 1420, un clavier 1430, une mémoire de masse 1440 par exemple de type disque dur, un périphérique de pointage 1450 par exemple de type souris, une imprimante 1460 en option et un périphérique d'accès réseau 1470 également en option.

La mémoire de masse 1440, ou tout autre mémoire, de l'ordinateur 1400 loge un système d'exploitation à interface graphique utilisateur. Le système d'exploitation est lancé, de façon connue, en général au démarrage de l'ordinateur.

En outre la mémoire de masse 1440 loge le programme de traitement des données DPP 200 et la base de données DB 100. Le programme de traitement des données DPP 200 peut être exécuté au moyen de l'unité de traitement ou CPU.

Le dispositif de traitement des données selon l'invention peut comprendre un logiciel destiné à être exécuté dans la mémoire d'une unité centrale, par exemple la mémoire de masse 1440 de l'ordinateur 1400 de la figure 14. En particulier, le programme de traitement des données DPP 200 et la base de données DAB 100 peuvent constituer des logiciels distincts mais capables de coopérer.

Le fonctionnement du dispositif selon l'invention, tel que décrit précédemment peut également être exprimé sous la forme d'un procédé.

Il a été décrit plus haut le cas de la définition d'une variable dont l'indice n'est pas entièrement déterminé au moment de cette définition. On a expliqué qu'alors, l'indice était totalement défini (i.e. pointant directement ou indirectement vers des valeurs numériques) dans une expression mathématique plus générale utilisant ladite variable. On comprend qu'il s'opère un remplacement de la variable par son arbre interprété par le générateur d'instruction ComGen 230 lorsque celui-ci traite la formule générale. Ceci peut être généralisé à des cas de formules définies de manière incomplète (i.e. l'arbre de compilation n'est pas complètement interprété) mais réutilisées dans des expressions complétant leur définition, ou encore lorsqu'un élément de formule est à priori absent de la base de données mais défini ultérieurement.

Les données à traiter DAT 110 peuvent être contenue dans une base de données distincte de la base de données DB 100 et liée au programme de traitement des données DPP 200 et au reste de la base de données DB 100.

Le programme de traitement des données DPP 200 peut être logé dans la mémoire de différents ordinateurs du type illustré par la figure 14 connectés par l'intermédiaires de leur périphérique d'accès réseau 1410 à un ordinateur de type serveur dont la mémoire de masse loge la base de données DB 100.

Le programme de traitement des données DPP 200 peut être logé dans la mémoire d'un ordinateur de type serveur et commandé depuis un programme d'interface exécuté dans un ordinateur distant. Par exemple, le programme de traitement des données DPP 200 peut être muni de moyens permettant son pilotage à partir d'un navigateur Internet exécuté dans un ordinateur distant.

La base de données DB 100 et/ou le programme de traitement des données DPP 200 peuvent être munis de moyens permettant d'alimenter la base de données DB 100 en données à traiter DAT 110, par exemple par extraction de données depuis des bases de données distantes.

L'invention couvre également le logiciel décrit, mis à disposition sous tout support lisible par ordinateur. L'expression "support lisible par ordinateur" comprend les supports de stockage de données, magnétiques, optiques et/ou électroniques, aussi bien qu'un support ou véhicule de transmission, comme un signal analogique ou numérique.

Annexe 1 - Glossaire

A.1.1 - Base de données

Tout ensemble de fichiers structurés, susceptibles d'être interconnectés par des liens entre ces fichiers.

A.1.2 - Table

Les éléments fondamentaux d'une base de données sont les "tables". Chaque table est un ensemble de lignes ; chaque ligne est organisée en une ou plusieurs colonnes ; et chaque colonne correspond à un type de données. Chaque ligne comprend une et une seule valeur (la "donnée") pour chaque colonne de la table. Physiquement, le stockage des données peut correspondre à cette structure en table, ou bien être différent.

A.1.3 - Langage naturel mathématique

Description d'une formule mathématique ou de conditions mathématiques à l'aide de symboles mathématiques conventionnels comme, par exemple :

$$\Sigma, +, -, \Pi, \sqrt{\phantom{x}}, f(x), x^n$$

La convention mathématique utilisée peut être celle du système éducatif scientifique français, par exemple.

A.1.4 - Variable

A.1.4.1 - Au sens mathématique, quantité susceptible de changer de valeur.
A.1.4.2 - Au sens d'une base de données, lien identifié vers des données stockées i.e. vers une partie d'un ou plusieurs fichiers.

A.1.5 - Opérateur

Symbole représentant une opération ou une suite d'opérations à effectuer sur des concepts quelconques, par exemple logiques, mathématiques ou physiques.

A.1.6 - Symbole de variable

Suite de caractères associée à une et une seule variable pour représenter cette variable en langage mathématique naturel.
Par convention, un symbole est constitué d'un nom de variable sous forme d'une première suite de caractères, d'un exposant sous forme d'une deuxième suite de caractères et d'indices sous forme d'une troisième suite de caractères et du caractère virgule "," comme indice particulier. L'exposant et les indices sont optionnels. La première suite peut être composée de caractères alphabétiques, majuscules ou minuscules. Les opérateurs sont proscrits.
La deuxième suite et la troisième suite peuvent être composées de tous les caractères sans restriction. Les deuxième et troisième suites sont optionnelles.
Les indices sont séparés par le caractère virgule ",". La troisième suite de caractères peut être ainsi décomposée en plusieurs suites de caractères associées chacune à un indice.

A.1.7 - symbole de fonctions

Symbole associé à une fonction mathématique en langage naturel mathématique. Par exemple le symbole de la fonction racine carrée est √.

A.1.8 - Langage MathML 2.0

Spécialisation pour les mathématiques du langage standard de mise en forme des données structurées XML. Le langage MathML est composé, comme le langage XML, de «balises ouvrantes» et «fermantes» qui permettent d'identifier les éléments constituant une expression mathématique. Il existe différentes variantes de ce métalangage comme «présentation» et «sémantique». La variante « présentation » est utilisée ici.

A.1.9 - Arbre de compilation

A.1.9.1 - Arbre n-aire contenant les opérations à effectuer d'une manière hiérarchique correspondant aux règles de priorités mathématiques. Soit $f$ une fonction, alors le noeud f de l'arbre contient les paramètres de la fonction $f$, c'est-à-dire que les paramètres de la fonction $f$ sont des sous-noeuds du noeud f.
A.1.9.2 - Représentation arborescente d'une formule mathématique constituée de fonctions simples, ou complexes, mais structurée pour une transcription dans un langage informatique quelconque.
A.1.9.3 - Ordonnancement structuré et hiérarchique d'étapes de compilation. L'arbre de compilation correspond à la phase de pré-compilation interprétant la mise en séquence d'une expression mathématique exprimée en métalangage.

A.1.10 - Clé ou colonne clé

Colonne d'une base de données capable de définir seule ou en combinaison avec d'autre colonnes clé et de façon unique une ligne dans un fichier d'une base de données.

A.1.11 - Fonction de calcul

Fonction pour laquelle la dimension du symbole associé à la variable de sortie est inférieure ou égale à la dimension des variables auxquelles s'applique ladite fonction. Par exemple la fonction logarithme de Neper *ln* est une fonction de calcul.

A.1.12 - Fonction agrégative

Fonction pour laquelle la dimension du symbole associé à la variable de sortie est strictement inférieure à la dimension des variables auxquelles s'applique ladite fonction. Par exemple les fonctions produit sur l'indice *i*, $\Pi$ et somme sur l'indice *i*, $\sum_i$ sont des fonctions agrégatives.

A.1.13 - Dimension d'une variable

Nombre de variables indépendantes dont la valeur doit être connue pour connaître la valeur de ladite variable.

A.1.14 - Dimension d'un symbole de variable

Nombre d'indices associés à un symbole de variable. La dimension d'un symbole de variable correspond à la dimension de la variable à laquelle il est associé. Chaque indice correspond à une variable indépendante.

A.1.15 - Opérateurs de conditions

Les opérateurs *Si, Alors, Sinon, Tant que; <, >, =, ≠, Ou, ET* et *Non* sont des opérateurs de conditions.

Annexe 2

A.2.1 - Formule exprimée en langage naturel mathématique

$$x = \frac{-b \pm \sqrt{b^2 - 4ac}}{2a}$$

A.2.2 - Formule de l'annexe A.2.1 exprimée en langage MathML 2.0

```
<mrow>
  <mi>x</mi>
  <mo>=</mo>
  <mfrac>
    <mrow>
      <mrow>
        <mo>-</mo>
        <mi>b</mi>
      </mrow>
      <mo>&PlusMinus;</mo>
      <msqrt>
        <mrow>
          <msup>
            <mi>b</mi>
            <mn>2</mn>
          </msup>
          <mo>-</mo>
          <mrow>
            <mn>4</mn>
            <mo>&InvisibleTimes;</mo>
            <mi>a</mi>
            <mo>&InvisibleTimes;</mo>
            <mi>c</mi>
          </mrow>
        </mrow>
      </msqrt>
    </mrow>
    <mrow>
      <mn>2</mn>
      <mo>&InvisibleTimes;</mo>
      <mi>a</mi>
    </mrow>
  </mfrac>
</mrow>
```

A.2.3 - Exemple d'un symbole de variable

$$Dcut_{ind,j,m_k}^{31/12/n-1}$$

A.2.4 - Symbole de variable A.2.3 en langage MathML 2.0

| | `<math>`<br>`  <mrow>` |
|---|---|
| A.2.4.1 | `<msubsup>` |

| A.2.4.2 | ```<br><mrow><br>  <mi>Dcut</mi><br></mrow><br>``` |
|---|---|
| A.2.4.3 | ```<br><mrow><br>  <mi>ind</mi><br>  <mo>,</mo><br>  <mi>j</mi><br>  <mo>,</mo><br>  <msub><br>    <mrow><br>      <mi>m</mi><br>    </mrow><br>    <mrow><br>      <mi>k</mi><br>    </mrow><br>  </msub><br></mrow><br>``` |
| A.2.4.4 | ```<br><mrow><br>  <mi>31/12/n-1</mi><br></mrow><br>``` |
| A.2.4.5 | ```<br>    </msubsup><br>  </mrow><br></math><br>``` |

Annexe 3

A.3.1 - Formule en langage naturel mathématique

$$a_i = b_i + \sum_j c_{i,j}$$

A.3.2 - Formule A.3.1 en MathML 2.0

```
<m:math xmlns:m='http://www.w3.org/1998/Math/MathML'>
  <m:mrow>
    <m:msub>
      <m:mi>a</m:mi>
      <m:mi>i</m:mi>
    </m:msub>
    <m:mo>=</m:mo>
    <m:mrow>
      <m:msub>
        <m:mi>b</m:mi>
        <m:mi>i</m:mi>
      </m:msub>
      <m:mo>+</m:mo>
      <m:mrow>
        <m:munder>
          <m:mo>&sum;</m:mo>
          <m:mrow>
            <m:mi>j</m:mi>
          </m:mrow>
        </m:munder>
        <m:msub>
          <m:mi>c</m:mi>
          <m:mrow>
            <m:mi>i</m:mi>
            <m:mo>,</m:mo>
            <m:mi>j</m:mi>
          </m:mrow>
        </m:msub>
      </m:mrow>
    </m:mrow>
  </m:mrow>
</m:math>
```

A.3.3 - Formule A.3.1 en arbre XML

| A.3.3.1 | `mrow`<br>`  msub`<br>`    mi (« a »)`<br>`    mi (« i »)` |
|---------|-----------------------------------------------------------|
| A.3.3.2 | `mo (« = »)`                                               |

| A.3.3.3 | `mrow`<br>`  msub`<br>`    mi (« b »)`<br>`    mi (« i »)`<br>`  mo (« + »)`<br>`  mrow`<br>`    munder`<br>`      mo (« &sum; »)`<br>`      mrow`<br>`        mi (« j »)`<br>`    msub`<br>`      mi (« c »)`<br>`      mrow`<br>`        mi(« i »)`<br>`        mo (« , »)`<br>`          mi (« j »)` |
|---------|----|

A.3.4 - Formule A.3.1 sous forme d'arbre de compilation

Annexe 4

A.4.1 Le hachage

Le hachage permet de réaliser des opérations de recherche et d'insertion dans une table en temps constant. Les mémoires associatives ont cette propriété : la position occupée par un objet est déterminée seulement par cet objet. Il suffit de calculer la position en mémoire de cet objet, i.e. de disposer d'une fonction $f$ qui associe à un objet $x$ une position $h(x)$. Le temps de calcul de la position $h(x)$ doit être indépendant de $x$ et aussi réduit que possible.

L'organisation des tables de hachage s'oppose radicalement à celle des tables ordonnées : dans une table ordonnée, la position d'un objet dépend du nombre d'objets plus petits qui ont déjà été insérés dans la table.

Pour insérer dans une table les éléments d'un ensemble [0, $N$-1], une solution triviale consiste à utiliser un tableau $t$ de taille $N$ et à ranger chaque objet $i$ dans $t[i]$ avec $h(i)=i$.

Pour traiter un ensemble quelconque $E$ de $N$ entiers, il est nécessaire de construire effectivement une fonction $h$ injective de l'ensemble $E$ dans l'ensemble des indices du tableau [0, $N$-1].

Pour insérer dans une table des objets d'un ensemble $E$ de cardinal plus grand, voire beaucoup plus grand, que $N$, il est nécessaire de construire une fonction qui, bien que non injective, possède de bonnes propriétés de dispersion.

A.4.2 Fonction de hachage

La fonction $h$ définie par la formule suivante est un exemple simple de fonction de hachage sur des chaînes de longueur $l$ à valeurs dans l'intervalle [0,$N$-1].

$$h(x) = \sum_{i=0}^{l-1} x[i]B^{l-1-i} \bmod N$$

où

- $B$ est une puissance de 2 pour faciliter le calcul, par exemple $B$ vaut 256, et
- $N$ est un nombre premier pour éviter des collisions arithmétiques.

*h(x)* est appelée valeur de hachage associée à la clé *x*. Comme la fonction de hachage *h* n'est pas injective, il est nécessaire de traiter les collisions. Il y a collision lorsque deux clés *x* et *y* différentes, (*x≠y*), ont la même valeur de hachage, (*(h(x)=h(y)*). Les annexes A.4.3 et A.4.4 exposent deux techniques de résolution, choisies selon que l'espace mémoire disponible est illimité ou pas.

A.4.3 Hachage par adressage ouvert

La table de hachage est implémentée comme un tableau t dont les cases vont contenir les objets. Initialement, la table est vide : chaque case contient un objet spécial vide, par exemple, un objet dont la clé est la chaîne vide "".

Des opérations d'insertion sont réalisées de la manière suivante :

- Si un objet de clé x doit être inséré et que *t[h(x)]* est vide, alors l'insertion se fait à cette place.
- Sii *t[h(x)]* est déjà occupé et que le contenu a une clé différente de *x*, alors on calcule des valeurs de hachage supplétives $h_1(x)$, $h_2(x)$, ... jusqu'à trouver *t[h_i(x)]* vide ou contenant un objet de clé *x*.

Pour générer ces valeurs de hachage supplétives, une méthode simple est de choisir $h_i(x)$ comme indiqué par la formule suivante :

$$h_i(x) = (h(x) + i) \bmod N$$

Cette méthode, appelée hachage linéaire, consiste à essayer les cases suivant *t[(h(x)]*. D'autres méthodes existent, telles que le hachage quadratique, le double hachage ou encore le hachage aléatoire, qui ont de meilleures capacités de dispersion.

Pour rechercher un objet de clé *x,* on teste les objets en *t[(h(x)]*, et éventuellement en *t[h_1(x)]*, *t[h_2(x)]*..., jusqu'à ce que la clé de l'objet qui s'y trouve soit égale à *x*, ou bien que l'objet soit vide.

Lorsque la table permet aussi des suppressions, il est nécessaire de remplacer un objet supprimé par un objet spécial *supprimé,* distinct de l'objet vide. En insertion, on utilise la première case vide ou supprimée, tandis qu'en recherche, on ne s'arrêtera qu'à la première case vide.

Au maximum, *N* opérations sont nécessaires, *N* étant la taille de la table. On définit le taux de chargement a d'une table de hachage de taille *N* contenant *n* objets comme suit :

$$\alpha = \frac{n}{N}$$

$\alpha$ est toujours compris entre 0 et 1. Pour donner une estimation asymptotique de la complexité des opérations, on fait tendre *n* et *N* vers l'infini, a restant constant. On montre que, sous une hypothèse d'uniformité, le nombre moyen d'accès nécessaires pour une recherche négative est d'au plus :

$$\frac{1}{1-\alpha},$$

et pour une recherche positive de :

$$\frac{1}{\alpha}\log\frac{1}{1-\alpha} + \frac{1}{\alpha}$$

Par exemple pour une table à moitié pleine, on doit s'attendre à faire 2 accès pour la recherche d'un objet ne se trouvant pas dans la table, et 3,387 accès s'il s'y trouve. Il s'agit bien d'un algorithme en Θ(1).

A.4.4 Hachage par chaînage

La méthode de hachage par adressage ouvert avec résolution linéaire présente l'inconvénient d'effectuer des comparaisons avec plusieurs cases successives de la table qui n'ont pourtant pas la même valeur de hachage que la chaîne recherchée. Pour éviter ces comparaisons inutiles, on réalise des chaînes liant les objets ayant la même valeur de hachage.

La table de hachage est implémentée par un tableau de pointeurs et non comme un tableau d'enregistrements. La recherche d'un enregistrement se fait simplement en parcourant la liste des enregistrements ayant la même valeur de hachage, à l'aide de la fonction de recherche sur les listes chaînées.

L'insertion d'un enregistrement $d$ dans une table $t$ est réalisée comme suit.

- On recherche la clé $x$ dans $t[h(x)]$.
- En cas d'échec, il y a allocation dynamique d'une nouvelle cellule dont les deux champs sont remplis et qui est placée en tête de la liste chaînée.
- En cas de succès, il y a remplacement de l'ancien champ par le nouveau.

La suppression d'un enregistrement dans une table est plus délicate, car il est nécessaire de déterminer la cellule précédent la cellule $c$ contenant l'enregistrement à supprimer. Le cas de la cellule de tête, qui n'a pas de prédécesseur, doit être traité à part. Dans tous les cas, la cellule supprimée doit être dés-allouée par une fonction d'effacement.

Le taux de chargement $\alpha$ est la longueur moyenne des listes chaînées. Sous une hypothèse d'uniformité de la fonction de hachage, on montre que le nombre moyen d'accès nécessaires pour une recherche, négative ou positive, est d'au plus $1+\alpha$.

**Revendications**

1. Dispositif de traitement de données, comprenant

   - une unité de traitement (200) capable d'interagir avec une base de données (100), la base de données comprenant des tables de données (110);
   - une interface graphique utilisateur agencée pour permettre à un utilisateur d'entrer une expression mathématique;

   l'unité de traitement comprenant :

   - un éditeur d'expression mathématique (210) capable d'établir une représentation informatique de travail d'une expression mathématique en interaction avec l'interface graphique utilisateur, l'expression mathématique étant en langage naturel mathématique et comprenant au moins un symbole de variable mathématique complexe, ayant un indice et/ou un exposant, et un symbole mathématique agrégatif opérant avec le symbole de variable mathématique complexe;
   - un dictionnaire de symboles (130) agencé pour stocker des métadonnées concernant le symbole de variable mathématique complexe, et comprenant des informations sur la structure de tables (110) de la base de données (100);
   - un éditeur de conditions (180;240) agencé pour produire une expression de condition, associée au symbole de variable mathématique complexe, l'expression de condition étant utilisable en combinaison des métadonnées pour sélectionner un sous-ensemble de données dans la base de données (100);
   - un générateur de requêtes (220;230) agencé pour traiter la représentation informatique de travail pour produire une séquence de code exécutant l'expression mathématique conformément aux règles du langage naturel mathématique et à la reconnaissance du symbole mathématique agrégatif et du symbole de variable mathématique complexe avec lequel il opère :
   - utiliser l'éditeur de conditions (180;240) pour produire une expression de condition de travail;
   - utiliser les métadonnées pour produire du code capable d'utiliser l'expression de condition de travail pour remplir un tableau de données de travail avec ledit sous-ensemble de données, et,
   - de combiner l'opérateur correspondant au symbole mathématique agrégatif avec le tableau de données de travail.

2. Dispositif de traitement de données selon la revendication 1, **caractérisé en ce que** le symbole mathématique agrégatif comprend un opérateur agrégatif, du genre somme ou produit, travaillant sur un symbole de variable mathématique complexe.

3. Dispositif de traitement de données selon la revendication 2, **caractérisé en ce que**, un symbole de variable mathématique complexe ayant précédemment été associé à au moins une colonne d'au moins une table (110), l'expression de condition restreint le jeu de valeurs contenu dans cette colonne.

4. Dispositif de traitement de données selon l'une des revendications précédentes, **caractérisé en ce que** l'éditeur d'expression mathématique (210) est agencé pour établir une représentation informatique d'une séquence d'expressions mathématiques comprenant des symboles mathématiques agrégatifs portant sur des symboles de variables mathématiques complexes, et **en ce que** le générateur de requêtes (230) est agencé pour réagir itérativement à la rencontre, dans chaque expresssion, d'un symbole mathématique agrégatif et d'un symbole de variable mathématique complexe associé, en produisant, à l'aide de métadonnées particulières et du code déjà établi pour ce symbole de variable mathématique complexe, du code exécutable capable de résoudre la condition contenue dans ladite expression, tout en remplissant le tableau dé données de travail (195) par les données issues de la résolution de la condition, ainsi que d'appliquer l'opérateur correspondant au symbole mathématique agrégatif à ce tableau de données de travail.

5. Dispositif de traitement de données selon l'une des revendications précédentes, **caractérisé en ce que** l'éditeur d'expression mathématique (210) est agencé pour traiter une expression mathématique comprenant des symboles mathématiques agrégatifs, opérant chacun sur un symbole de variable mathématique complexe, **en ce que**, en présence d'un symbole mathématique agrégatif dans la représentation informatique de travail issue de l'éditeur d'expression mathématique, l'éditeur de conditions (240) est susceptible d'être actionné pour établir une correspondance entre un symbole mathématique agrégatif et une métadonnée particulière avec son symbole de variable mathématique complexe associé, en produisant, à l'aide de la métadonnée particulière et de la nature de l'opérateur correspondant au symbole mathématique agrégatif du code exécutable capable de résoudre la condition contenue dans ladite expression, tout en remplissant le tableau de données de travail (195) par les données issues de la résolution de la condition, ainsi que d'appliquer cet opérateur particulier à ce tableau de données de travail.

6. Dispositif de traitement de données selon l'une des revendications précédentes, caractérisé en ce le générateur de requêtes (230;220) comprend un mécanisme apte à effectuer sélectivement des traitements différents selon la comparaison d'une chaîne de la représentation informatique de travail à trois ensembles de possibilités différentes, représentant respectivement un opérateur d'agrégation, un opérateur simple et un symbole réservé, ledit mécanisme pouvant être déclenché sur un test relatif à un symbole d'opérateur mathématique.

7. Dispositif de traitement de données selon la revendication 6, **caractérisé en ce que** le générateur de requêtes (220;230) comprend un mécanisme apte à effectuer sélectivement des traitements différents sur la base d'un test relatif à un symbole de variable.

8. Dispositif de traitement de données selon l'une des revendications précédentes, **caractérisé en ce qu'**il comprend en outre un éditeur de traitement (250) capable d'établir une expression d'un enchaînement ordonné d'expressions mathématiques à partir de secondes règles formelles.

9. Dispositif de traitement de données selon l'une des revendication précédentes, **caractérisé en ce qu'**il comprend en outre un générateur de requêtes supplémentaire (260) capable d'établir, pour un symbole de variable particulier, à partir de données stockées (110) correspondant à ce symbole de variable particulier, une progression mathématique liant ces données entre elles.

10. Dispositif de traitement de données selon la revendication 9, **caractérisé en ce que** le générateur de requête supplémentaire (260) est capable de générer du code exécutant ladite progression pour compléter l'ensemble des données stockées (110) associées audit symbole de variable particulier.

11. Dispositif de traitement de données selon l'une des revendications précédentes, **caractérisé en ce que** le générateur de requêtes (220;230) est agencé pour autoriser conditionnellement dans une expression mathématique un symbole de variable mathématique dont les métadonnées associées contiennent une expression en attente, sans correspondance immédiate avec des données stockées en mémoire.

12. Dispositif de traitement de données selon l'une des revendications précédentes, **caractérisé en ce que** le tableau de données de travail (195) est un tableau ouvert. susceptible d'être rempli ultérieurement par le générateur de requêtes (220;230) en particulier pour le traitement d'expressions mathématiques successives.

13. Programme-produit susceptible de coopérer avec un ordinateur pour constituer le dispositif de traitement des données selon l'une des revendications précédentes.

**Claims**

1. A data processing device, comprising

   - a processing unit (200) configured to cooperate with a database (100), the database comprising data tables;
   - a graphical user interface arranged to allow a user to input a mathematical expression;

   the processing unit comprising:

   - a mathematical expression editor (210) capable of producing a working computing representation of a mathematical expression by interacting with the graphical user interface, the mathematical expression being in natural mathematical language and comprising at least one complex mathematical variable symbol, having a subscript and/or a superscript, and one aggregative mathematical symbol operating with the complex mathematical variable symbol;
   - a symbol dictionary (130) arranged to store metadata relating to complex mathematical variable symbol, and comprising information about the structure of tables (110) of the database (100);
   - a condition editor (180;240) arranged to produce an condition expression associated to complex mathematical variable symbol, the condition expression being usable in conjunction with the metadata to select a subset of data in the database (100);
   - a request generator (220;230) arranged to process the working computing representation in order to produce a code sequence executing the mathematical expression according to the rules of the natural mathematical language and, upon recognizing of the aggregative mathematical symbol and the complex mathematical variable symbol with which it operates, to :
   - use the condition editor (180;240) to produce a working condition expression,
   - use the metadata to produce code capable of using the working condition expression in order to fill a working data array with said subset of data, and
   - combine the operator corresponding to the aggregative mathematical symbol with the working data array.

2. A data processing device according to claim 1, **characterised in that** the aggregative mathematical symbol comprises an aggregative operator, of the sum or product kind, working on a complex mathematical variable symbol.

3. A data processing device according to claim 2, **characterised in that**, a complex mathematical variable symbol having previously been associated with at least one column of at least one table (110), the condition expression restricts the set of values contained in this column.

4. A data processing device according to one of the preceding claims, **characterised in that** the mathematical expression editor (210) is arranged to establish a computing representation of a sequence of mathematical expressions, comprising aggregative mathematical symbols relating to complex mathematical variable symbols, and **in that** the request generator (230) is arranged to react iteratively upon encountering, in each expression, a aggregative mathematical symbol and an associated complex mathematical variable symbol, by producing, using particular metadata and the code already produced for this complex mathematical variable symbol, executable code capable of resolving the condition contained in said expression, whilst filling the working data array (195) with the data resulting from the resolution of the condition, as well as applying the operator that corresponds to the aggregative mathematical symbol to this working data array.

5. A data processing device according to one of the preceding claims, **characterised in that** the mathematical expression editor (210) is arranged to process a mathematical expression comprising aggregative mathematical symbols, each operating on a complex mathematical variable symbol, and **in that**, in the presence of an aggregative mathematical symbol in the working computing representation stemming from the mathematical expression editor (210), the condition editor (240) is capable of being activated in order to establish a correspondence between one aggregative mathematical symbol and a particular item of metadata with its associated complex mathematical variable symbol, by producing, using the particular item of metadata and the nature of the operator that corresponds to the aggregative mathematical symbol, executable code capable of resolving the condition contained in said expression, whilst filling the working data array (195) with the data resulting from resolution of the condition, as well as applying this particular operator to this working data array.

6. A data processing device according to one of the preceding claims, **characterised in that** the request generator (230; 220) comprises a mechanism able to selectively carry out different processing operations depending upon the comparison of a string of the working computing representation with three sets of different possibilities, representing respectively an aggregation operator, a simple operator and a reserved symbol, it being possible for said mechanism to be activated on a test relating to a mathematical operator identifier.

7. A data processing device according to claim 6, **characterised in that** the request generator comprises a mechanism able to selectively carry out different processing operations on the basis of a test relating to a variable identifier.

8. A data processing device according to one of the preceding claims, **characterised in that** it furthermore comprises a processing editor (250) capable of producing an expression of an ordered sequence of mathematical expressions from second formal rules.

9. A data processing device according to one of the preceding claims, **characterised in that** it furthermore comprises a supplementary request generator (260) capable of producing, for a particular variable symbol, from stored data (110) corresponding to this particular variable symbol, a mathematical progression interlinking this data.

10. A data processing device according to claim 9, **characterised in that** the supplementary request generator (260) is capable of generating code executing said progression in order to complete the set of stored data (110) associated with said particular variable symbol.

11. A data processing device according to one of the preceding claims, **characterised in that** the request generator (220; 230) is arranged to conditionally allow in a mathematical expression a mathematical variable symbol the associated metadata of which contains an standby expression, without immediate correspondence with data stored in memory.

12. A data processing device according to one of the preceding claims, **characterised in that** the working data array (195) is an open array, capable of being filled later by the request generator (220; 230) in particular for the processing of successive mathematical expressions.

13. A program product capable of cooperating with a computer in order to constitute the data processing device according to one of the preceding claims.

**Patentansprüche**

1. Vorrichtung zur Verarbeitung von Daten, mit

   - einer Verarbeitungseinheit (200), die in der Lage ist, mit einer Datenbank (100) zu interagieren, wobei die Datenbank Datentabellen (110) aufweist;
   - einem graphischen Benutzerinterface, das eingerichtet ist, einem Benutzer zu ermöglichen, einen mathematischen Ausdruck einzugeben;

   wobei die Verarbeitungseinheit aufweist:

   - ein Mathematikausdruckseditor (210), der in der Lage ist, eine Computerarbeitsdarstellung eines mathematischen Ausdrucks bei Interaktion mit dem graphischen Benutzerinterface zu schaffen, wobei der mathematische Ausdruck in natürlicher Mathematiksprache vorliegt und wenigstens ein komplexen Mathematikvariablensymbol mit einem Indiz und/oder einem Exponenten aufweist, und ein aggregatives Mathematiksymbol, das mit dem komplexen Mathematikvariablensymbol operiert;
   - ein Symbolwörterbuch (130), das eingerichtet ist, um Metadaten zu speichern, die das komplexe Mathematikvariablensymbol betreffen, und Informationen über die Struktur von Tabellen (110) der Datenbank (100) aufweist;
   - einen Bedingungseditor (180; 240), der eingerichtet ist, um einen dem komplexen Mathematikvariablensymbol zugeordneten Bedingungsausdrucks zu erzeugen, wobei der Bedingungsausdruck in Kombination mit den Metadaten verwendbar ist, um eine Untermenge von Daten in der Datenbank (100) auszuwählen;

- einen Anfragengenerator (220; 230), der eingerichtet ist, um die Computerarbeitsdarstellung zu verarbeiten, um eine Codefolge zu erzeugen, die den mathematischen Ausdruck gemäß den Regeln der natürlichen Mathematiksprache ausführt, und, bei der Erkennung des aggregativen Mathematiksymbols und des komplexen Mathematikvariablensymbols, mit dem er operiert:

- den Bedingungseditor zu verwenden (180; 240), um einen Arbeitsbedingungsausdruck zu erzeugen;

- die Metadaten zu verwenden, um Code zu erzeugen, der in der Lage ist, den Arbeitsbedingungsausdruck zu verwenden, um eine Arbeitsdatentabelle mit der Datenuntermengen zu füllen, und

- den dem aggregativen Mathematiksymbol entsprechenden Operator mit der Arbeitsdatentabelle zu kombinieren.

2. Vorrichtung zur Verarbeitung von Daten nach Anspruch 1, **dadurch gekennzeichnet, dass** das aggregative Mathematiksymbol einen aggregativen Operator von der Art Summe oder Produkt aufweist, der an einem komplexen Mathematikvariablensymbol arbeitet.

3. Vorrichtung zur Verarbeitung von Daten nach Anspruch 2, **dadurch gekennzeichnet, dass** ein komplexes Mathematikvariablensymbol vorher wenigstens einer Spalte wenigstens einer Tabelle (110) zugeordnet worden war, der Bedingungsausdruck den Satz von Werten, der in dieser Spalte enthalten ist, einschränkt.

4. Vorrichtung zur Verarbeitung von Daten nach einem der vorhergehenden Ansprüche, **dadurch gekennzeichnet, dass** der Mathematikausdruckseditor (210) vorgesehen ist, um eine Computerdarstellung einer Folge von mathematischen Ausdrücken zu schaffen, die aggregative Mathematiksymbole aufweisen, die komplexe Mathematikvariablensymbole betreffen, und dass der Abfragegenerator (230) eingerichtet ist, um iterativ beim Treffen in einem jeden Ausdruck auf ein aggregatives Mathematiksymbol und ein zugeordnetes komplexes Mathematikvariablensymbol zu reagieren, unter Erzeugen mit Hilfe von speziellen Metadaten und des schon etablierten Codes für dieses komplexe Mathematikvariablensymbol, ausführbaren Code zu erzeugen, der in der Lage ist, die in dem Ausdruck enthaltene Bedingung zu lösen, durch Füllen der Arbeitsdatentabelle (195) durch die von der Lösung der Bedingung stammende Daten, sowie Aufbringen des dem aggregativen mathematischen Symbol entsprechende Operators auf diese Arbeitsdatentabelle.

5. Vorrichtung zur Verarbeitung von Daten nach einem der vorhergehenden Ansprüche, **dadurch gekennzeichnet, dass** der Mathematikausdruckseditor (210) vorgesehen ist, um einen mathematischen Ausdruck zu verarbeiten, der aggregative Mathematiksymbole aufweist, jedes operierend auf einem komplexen Mathematikvariablensymbol, und dass beim Vorliegen eines aggregativen Mathematiksymbols in der Computerarbeitsdarstellung, die von dem Mathematikausdruckseditor hervorgebracht wird, der Bedingungseditor (240) in der Lage ist, tätig zu werden, um eine Verbindung zwischen einem aggregativen Mathematiksymbol und einem besonderen Metadatum mit seinem zugeordneten komplexen Mathematikvariablensymbol zu schaffen, unter Erzeugen, mit Hilfe des besonderen Metadatums und der Natur des dem aggregativen Mathematiksymbol entsprechenden Operators, ausführbare Code, die in der Lage ist, die in dem Ausdruck enthaltene Bedingung zu lösen, unter Füllen der Arbeitsdatentabelle (195) durch die von der Lösung der Bedingung stammenden Daten, sowie Aufbringen dieses besonderen Operators auf diese Arbeitsdatentabelle.

6. Vorrichtung zur Verarbeitung von Daten nach einem der vorhergehenden Ansprüche, **dadurch gekennzeichnet, dass** der Anfragengenerator (230, 220) einen Mechanismus aufweist, der geeignet ist, selektiv unterschiedliche Behandlungen auszuführen, gemäß dem Vergleich einer Kette von Computerarbeitsdarstellungen mit drei unterschiedlichen Möglichkeitsanordnungen, die entsprechend einen Aggregationsoperator, einen einfachen Operator bzw. ein geschütztes Symbol darstellen, wobei der Mechanismus ausgelöst werden kann auf einen Test, entsprechend einem mathematischen Operatorsymbol.

7. Vorrichtung zur Verarbeitung von Daten nach Anspruch 6, **dadurch gekennzeichnet, dass** der Anfragengenerator (220; 230) einen Mechanismus aufweist, der in der Lage ist, wahlweise unterschiedliche Verarbeitungen auf der Basis eines Tests bezüglich einem Variablensymbol auszuführen.

8. Vorrichtung zur Verarbeitung von Daten nach einem der vorhergehenden Ansprüche, **dadurch gekennzeichnet, dass** sie darüber hinaus einen Verarbeitungseditor (250) aufweist, der in der Lage ist, einen Ausdruck eines geordneten Programmablaufs von mathematischen Ausdrücken, ausgehend von zweiten formellen Regeln, zu schaffen.

9. Vorrichtung zur Verarbeitung von Daten nach einem der vorhergehenden Ansprüche, **dadurch gekennzeichnet, dass** sie darüber hinaus einen zusätzlichen Abfragegenerator (260) aufweist, der in der Lage ist, für ein besonderes Variablensymbol, ausgehend von gespeicherten Daten (110), die diesem besonderen Variablensymbol entsprechen, eine mathematische Fortschreitung, die diese Daten untereinander verbindet, zu erzeugen.

10. Vorrichtung zur Verarbeitung von Daten nach Anspruch 9, **dadurch gekennzeichnet, dass** der zusätzliche Abfragegenerator (260) in der Lage ist, Code zu erzeugen, der die Fortschreitung ausführt, um die Gesamtheit der gespeicherten Daten (110), die dem besonderen Variablensymbol zugeordnet sind, zu vervollständigen.

11. Vorrichtung zur Verarbeitung von Daten nach einem der vorhergehenden Ansprüche, **dadurch gekennzeichnet, dass** der Abfragegenerator (220; 230) vorgesehen ist, unter Bedingungen in einem mathematischen Ausdruck ein Mathematikvariablensymbol zu erlauben, dessen zugeordnete Metadaten einen Erwartungsausdruck, ohne unmittelbare Verbindung mit den im Speicher gespeicherten Daten, enthalten.

12. Vorrichtung zur Verarbeitung von Daten nach einem der vorhergehenden Ansprüche, **dadurch gekennzeichnet, dass** die Arbeitsdatentabelle (195) eine offene Tabelle ist, die in der Lage ist, nachträglich durch den Abfragegenerator (220; 230), insbesondere die Verarbeitung von aufeinanderfolgenden mathematischen Ausdrücken, zu füllen.

13. Programmprodukt, das in der Lage ist, mit einem Computer zusammenzuwirken, um die Vorrichtung zur Verarbeitung von Daten nach einem der vorhergehenden Ansprüche zu bilden.

Fig.1

**Fig.2**

EP 1 828 941 B1

**Fig.4**

**Fig.3**

# Fig.5

500

| MathComp ◄— | ⎧ VarSymbDic<br>⎨ FctDic<br>⎩ OpDic  ResSymbDic |

502

XMLRdr ◄—— Y = F (x)

504

DivFct ——► A := Y
B := F(x)

506

IndFct (A)

508

IndFct (B)

510

Arbre de complication

Fig.6

┌ ─ ─ ─ ─ ─ ─ ┐
│              │ ～ 504
└ ─ ─ ─ ─ ─ ─ ┘
↓

| N1 := TRdr | ～ 600

↓

◇ N1 := mi ◇ —O— | LocVar (arg_mi; SVar) | ～ 604
602

N

| N2 := TRdr | ～ 606

◇ N2 = mi ◇ —N— | err | ～ 610
608

O

| L1 := OccVar (arg_mi;CVar) | ～ 612

| Comp (L1) | ～ 614

┌ ─ ─ ─ ─ ─ ─ ┐
│              │ ～ 508
└ ─ ─ ─ ─ ─ ─ ┘

**Fig.7**

**Fig.8**

```
┌─────────────────────────────────┐  850
│        C := sous-arbre          │
└─────────────────────────────────┘
                 │
┌─────────────────────────────────┐  852
│      arg_mi  ──────▶  IndTmp    │
└─────────────────────────────────┘
                 │
┌─────────────────────────────────┐  854
│    Conditions  ──────▶  IndTmp  │
└─────────────────────────────────┘
                 │
┌─────────────────────────────────┐  856
│    balise msub, msup ou msubsup │
└─────────────────────────────────┘
                 │
               (  900  )
```

**Fig.8A**

**Fig.14**

1400

1460

1420

1410

1470

1440

1450

1430

Fig.9

```
┌─────────────────────────────┐
│  Trouver balise mi ou mo    │───── 900
└─────────────────────────────┘
              │
              ◇ 902                    ◇ 904          ┌──────┐
           balise mo ─── O ─── arg = ( ─── N ──│  Err │ ─── 908
              │                          │          └──────┘
              │ N                        │
              │                  ┌──────────┐
              ◇ 910              │   exp    │─── 906
         balise mi ─── N ──┐     └──────────┘
         arg Є CVar        │
              │      ┌────────────────────────┐
              │      │   ajout arg à CVar     │
              │      └────────────────────────┘
              │                    │
              │                   912
┌─────────────────────────────┐
│  liste des variables de CVar │─── 914
│       avec arg = nm          │
└─────────────────────────────┘
              │
              ◇ 916                      ┌──────┐
        Pour chaque ─── N ──────────────│  Err │ ─── 918
      variable trouvée                  └──────┘
      séquence Є arbre
              │
              │ O
              ◇ 920                ┌────────┐
         indices ─── N ───────────│  Suite │ ─── 922
      supplémentaires             └────────┘
              │
              │ O
          ⬭ Err ─── 1000
```

Fig.10A

Fig.10B

Fig.10C

## Fig.11

## Fig.12

## Fig.13

```
┌──────────────────────┐
│ Sélection de la      │
│ variable V de clé pour│
│ laquelle il manque   │──── 1300
│ des valeurs          │
└──────────────────────┘
           │
           ▼
┌──────────────────────┐
│ Tri croissant        │
│ de la variable       │──── 1302
└──────────────────────┘
           │
           ▼
        1304
     ◇ La variable V ◇    Non      1306                      1308
     ◇ est elle une date ou une ◇ ───────►◇ La variable V ◇   Non   ┌──────────┐
     ◇ heure ? ◇                          ◇ est elle alphanumérique ◇ ────►│ Erreur  │
                                          ◇ ? ◇                       └──────────┘
           │ Oui                                  │ Oui
           ▼                                                           1310
┌──────────────────────┐                          ▼
│ Ration moyen         │                 ┌──────────────────────┐
│ pour obtenir la      │──── 1332        │ Calcul du P: nb      │
│ fréquence F          │                 │ d'unité pour passer  │
└──────────────────────┘                 │ à la valeur suivante │
           │                             └──────────────────────┘
           ▼                                       │
┌──────────────────────┐         1312 ──┐          ▼
│ Définition de la portée: │──── 1334   │ ┌──────────────────────┐
│ début : min (V)      │               └─│ Définition de la portée: │
│ fin : max (V)        │                 │ début : min (V)      │
│ i=0                  │                 │ fin : max (V)        │
└──────────────────────┘                 │ i=0                  │
           │                             └──────────────────────┘
           ▼           1336                         │
┌──────────────────────┐  Sinon    Sinon            ▼
│ tant que la date $D_i$ │────────────────  ┌──────────────────────┐
│ est inférieure à     │                    │ tant que la valeur $U_i$ │
│ max (V)              │                    │ est inférieure à     │
└──────────────────────┘                    │ max (V)              │
           │ Alors                          └──────────────────────┘
           ▼                    1314 ──┘       │ Alors
┌──────────────────────┐  ┌──────────────────┐ ▼
│ $D_i$=max (V) + iF   │  │ Génération de la liste │ ┌──────────────────────┐
└──────────────────────┘  │ théorique des valeurs │ │ $U_i$=min (V) + iP   │
  1338        1340        │ manquantes de        │ └──────────────────────┘
           │              │ la variable V        │ 1316          1318
           ▼              └──────────────────┘      │
     ◇ La valeur de la ◇                            ▼
     ◇ variable V existe-t-elle ◇ Non        ◇ La valeur de la ◇
     ◇ en $D_i$ ◇                             ◇ variable V existe-t-elle ◇  Non
           │ Oui      1342                    ◇ en $U_i$ ◇
           ▼                                        │ Oui        1320
┌──────────────────────┐     1338                   ▼
│ Enregistrer $D_i$    │      │             ┌──────────────────────┐
│ dans une             │      ▼             │ Enregistrer $U_i$    │
│ liste L              │  ┌──────────────┐  │ dans une             │
└──────────────────────┘  │ Création des │  │ liste L              │
           │       1344   │ lignes       │  └──────────────────────┘
           ▼              │ manquantes à │   1330        │
┌──────────────────────┐  │ partir       │              ▼
│ i ← i+1              │◄─│ de la liste L│  ┌──────────────────────┐
└──────────────────────┘  └──────────────┘  │ i ← i+1             │
                           1340    │         └──────────────────────┘
                                   ▼
                            ┌──────────┐
                            │ Fin      │
                            └──────────┘
```

34

**EP 1 828 941 B1**

**Documents brevets cités dans la description**

- US 20040133567 A1